# EUROPEAN PATENT APPLICATION

(11) **EP 4 568 053 A1**
(43) Date of publication of application: **11.06.2025**
(21) Application number: 23893455.8
(22) Date of filing: 10.10.2023
(51) Int. Cl.: H02J 7/00

(54) **FOLDABLE ELECTRONIC DEVICE AND CONTROL METHOD**

(30) Priority: 21.11.2022 CN 202211459679
(71) Applicant: Honor Device Co., Ltd., Shenzhen, Guangdong 518040 (CN)
(72) Inventor: SHI, Cong, Shenzhen, Guangdong 518040 (CN); ZHU, Chen, Shenzhen, Guangdong 518040 (CN); CAO, Lei, Shenzhen, Guangdong 518040 (CN); MAO, Yang, Shenzhen, Guangdong 518040 (CN)
(74) Representative: Gill Jennings & Every LLP
(86) International application number: PCT/CN2023/123706
(87) International publication number: WO 2024/109363

(57) **Abstract**

Embodiments of this application provide a foldable electronic device and a control method. The electronic device includes a first folding portion, a second folding portion, and a rotating shaft; and a first battery and a charging interface are arranged in the first folding portion, and a second battery is arranged in the second folding portion, where a first charging branch and a second charging branch are provided between the charging interface of the electronic device and a ground terminal of the electronic device, the first battery is in the first charging branch, and the second battery is in the second charging branch; the first charging branch includes M current control elements; and the electronic device further includes a control unit, and the control unit is configured to increase, when a current that charges the first battery in the first charging branch is greater than a first preset threshold, resistance values of some or all of the M current control elements, to cause an adjusted current that charges the first battery in the first charging branch to be less than or equal to the first preset threshold. In this way, the current of the branch may not exceed a maximum charging current of the battery, thereby protecting battery performance.

## Description

This application claims priority to Chinese Patent Application No. 202211459679.1, entitled "FOLDABLE ELECTRONIC DEVICE AND CONTROL METHOD" filed with the China National Intellectual Property Administration on November 21, 2022, which is incorporated herein by reference in its entirety.

### TECHNICAL FIELD

This application relates to the field of terminal technologies, and in particular, to a foldable electronic device and a control method.

### BACKGROUND

With the progress of terminal technologies, foldable electronic devices (such as foldable screen phones) are also gradually developed. Compared with a bar phone, a foldable screen phone has a larger screen and therefore consumes more power. In addition, due to an internal structure of the foldable screen phone, a large single battery probably cannot be placed. To achieve a battery endurance requirement of the foldable electronic device, a plurality of batteries may be used to supply power to the foldable electronic device.

Currently, one battery is usually arranged on each of a main board and a sub-main board of a foldable electronic device. After the foldable electronic device is connected to a charger, the charger charges the two batteries separately, or it may be understood that the two batteries are charged in parallel.

However, in the foregoing implementation, when the batteries are charged, the battery on the main board of the foldable electronic device is prone to phenomena such as battery overheating and battery deformation, resulting in impaired battery performance.

### SUMMARY

Embodiments of this application provide a foldable electronic device and a control method, applied to the field of terminal technologies. By arranging a resistance variable element at one or more positions in a charging circuit of a foldable electronic device, when a current of a branch where a battery on a main board is located is large, a resistance value of a corresponding resistance variable element may be increased based on a control signal sent by a control unit, to reduce the current of the branch.

According to a first aspect, an embodiment of this application provides a foldable electronic device. The electronic device includes a first folding portion, a second folding portion, and a rotating shaft, and the first folding portion and the second folding portion are connected by the rotating shaft; and a first battery and a charging interface are arranged in the first folding portion, and a second battery is arranged in the second folding portion, where a first charging branch and a second charging branch are provided between the charging interface of the electronic device and a ground terminal of the electronic device, the first charging branch is located in the first folding portion, and the second charging branch is distributed in the first folding portion, the second folding portion, and the rotating shaft; the first battery is in the first charging branch, and the second battery is in the second charging branch; the first charging branch includes M current control elements, where M is a positive integer; and the electronic device further includes a control unit, and the control unit is configured to increase, when a current that charges the first battery in the first charging branch is greater than a first preset threshold, resistance values of some or all of the M current control elements, to cause an adjusted current that charges the first battery in the first charging branch to be less than or equal to the first preset threshold. In this way, the current that charges the first battery can be reduced, thereby avoiding phenomena such as battery overheating and battery deformation in the first battery, and protecting battery performance from impairment.

In a possible implementation, the first charging branch further includes a first charger chip, the first charger chip is located between the charging interface and the first battery, and M1 current control elements of the M current control elements are located between the first charger chip and the first battery, where M1 is a positive integer less than or equal to M. In this way, a current control element is placed between the first charger chip and the first battery, so that the magnitude of the current that charges the first battery in the first charging branch can be effectively regulated.

The first charging branch further includes a first board-to-board connector, and the first board-to-board connector is located between the first charger chip and the first battery; and the M1 current control elements are located between the first charger chip and the first board-to-board connector; or the M1 current control elements are located between the first board-to-board connector and the first battery; or some of the M1 current control elements are located between the first charger chip and the first board-to-board connector, and some other of the M1 current control elements are located between the first board-to-board connector and the first battery. In this way, a current control element is placed between the first charger chip and the first board-to-board connector, and/or a current control element is placed between the first board-to-board connector and the first battery, so that the magnitude of the current that charges the first battery in the first charging branch can be effectively regulated.

In a possible implementation, the first charging branch further includes a first charger chip, the first charger chip is located between the charging interface and the first battery, and M2 current control elements of the M current control elements are located between the first charger chip and the charging interface, where M2 is a positive integer less than or equal to M. In this way, a current control element is placed between the first charger chip and the charging interface, so that the magnitude of the current that charges the first battery in the first charging branch can be effectively regulated.

In a possible implementation, the first charging branch further includes a first gauge unit, the first gauge unit is located between the first battery and the ground terminal, and the first gauge unit is configured to gauge value of a current that charges the first battery. In this way, the value of the current that charges the first battery can be accurately gauged by the first gauge unit.

In a possible implementation, the control unit is further configured to decrease, when a current that charges the first battery in the first charging branch is less than the first preset threshold, resistance values of some or all of the M current control elements, to cause a difference between an adjusted current that charges the first battery in the first charging branch and the first preset threshold to be less than a first preset value.

In a possible implementation, the control unit is configured to: when a current that charges the first battery in the first charging branch is greater than the first preset threshold, first increase resistance values of some or all of the M1 current control elements located between the first charger chip and the first battery, and then increase resistance values of some or all of the M2 current control elements located between the first charger chip and the charging interface, to cause an adjusted current that charges the first battery in the first charging branch to be less than or equal to the first preset threshold; or the control unit is configured to: when a current that charges the first battery in the first charging branch is greater than the first preset threshold, first increase resistance values of some or all of the M1 current control elements located between the first charger chip and the first battery, to cause an adjusted current that charges the first battery in the first charging branch to be less than or equal to the first preset threshold, and then decrease resistance values of some or all of the M2 current control elements located between the first charger chip and the charging interface, to cause a difference between an adjusted current that charges the first battery in the first charging branch and the first preset threshold to be less than the first preset value. In this way, a charging process can be made safe, and battery performance can be protected from impairment. In addition, a high charging speed of the first battery can be achieved, so that the charging is completed in a short time, thereby improving user experience.

In a possible implementation, the second charging branch includes N current control elements, where N is a positive integer; and the control unit is further configured to decrease, when a current that charges the second battery in the second charging branch is less than a second preset threshold, resistance values of some or all of the N current control elements, to cause a difference between an adjusted current that charges the second battery in the second charging branch and the second preset threshold to be less than a second preset value; or the control unit is further configured to increase, when a current that charges the second battery in the second charging branch is greater than a second preset threshold, resistance values of some or all of the N current control elements, to cause an adjusted current that charges the second battery in the second charging branch to be less than or equal to the second preset threshold. In this way, a high charging speed of the second battery can be achieved, thereby improving user experience. In addition, a charging process can be made safe, phenomena such as battery overheating and battery deformation in the second battery is avoided, and battery performance is protected.

In a possible implementation, the second charging branch further includes a second charger chip, the second charger chip is located between the charging interface and the second battery, and N1 current control elements of the N current control elements are located between the second charger chip and the second battery, where N1 is a positive integer less than or equal to N. In this way, a current control element is placed between the second charger chip and the second battery, so that the magnitude of the current that charges the first battery in the second charging branch can be effectively regulated.

In a possible implementation, the second charging branch further includes a second board-to-board connector, and the second board-to-board connector is located between the second charger chip and the second battery; and the N1 current control elements are located between the second charger chip and the second board-to-board connector; or the N1 current control elements are located between the second board-to-board connector and the second battery; or some of the N1 current control elements are located between the second charger chip and the second board-to-board connector, and some other of the N1 current control elements are located between the second board-to-board connector and the second battery. In this way, a current control element is placed between the second charger chip and the second board-to-board connector, and/or a current control element is placed between the second board-to-board connector and the second battery, so that the magnitude of the current that charges the second battery in the second charging branch can be effectively regulated.

In a possible implementation, N2 current control elements of the N current control elements are located between the second charger chip and the charging interface, where N2 is a positive integer less than or equal to N. In this way, a current control element is placed between the second charger chip and the charging interface, so that the magnitude of the current that charges the second battery in the second charging branch can be effectively regulated.

In a possible implementation, the N2 current controlling elements are located in the first folding portion; or the N2 current controlling elements are located in the second folding portion; or some of the N2 current controlling elements are located in the first folding portion, and some other of the N2 current controlling elements are located in the second folding portion. In this way, a current control element is placed between the second charger chip and the charging interface and in the first folding portion, and/or a current control element is placed between the second charger chip and the charging interface and in the second folding portion, so that the magnitude of the current that charges the second battery in the second charging branch can be effectively regulated.

In a possible implementation, N3 current control elements are included between the second battery and the ground terminal, where N3 is a positive integer less than or equal to N. In this way, a current control element is placed between the second battery and the ground terminal, so that the magnitude of the current that charges the second battery in the second charging branch can be effectively regulated.

In a possible implementation, the N3 current controlling elements are located on the first folding portion; or the N3 current controlling elements are located in the second folding portion; or the N3 current controlling elements are located in the rotating shaft; or some of the N3 current controlling elements are located in the first folding portion, some of the N3 current controlling elements are located in the second folding portion, and remaining current controlling elements of the N3 current controlling elements are located in the rotating shaft. In this way, the magnitude of the current that charges the second battery in the second charging branch can be effectively regulated.

In a possible implementation, for the electronic device according to claim 8, the first charging branch includes the first board-to-board connector, the second charging branch includes a second board-to-board connector, and L current control elements are included between the first board-to-board connector and the second board-to-board connector, where L is a positive integer. In this way, a current control element is placed between the first board-to-board connector and the second board-to-board connector, so that the magnitude of the current that charges the first battery or charges the second battery can be effectively regulated.

In a possible implementation, the L current controlling elements are located in the first folding portion; or the L current controlling elements are located in the second folding portion; or some of the L current controlling elements are located in the first folding portion, and some other of the L current controlling elements are located in the second folding portion. In this way, a current control element is placed between the first board-to-board connector and the second board-to-board connector and in the first folding portion, and/or a current control element is placed between the first board-to-board connector and the second board-to-board connector and in the second folding portion, so that the magnitude of the current that charges the first battery or charges the second battery can be effectively regulated.

In a possible implementation, the second charging branch further includes a second gauge unit, the second gauge unit is located between the second battery and the ground terminal, and the second gauge unit is configured to gauge value of a current that charges the second battery. In this way, the value of the current that charges the second battery can be accurately gauged by the second gauge unit.

In a possible implementation, the control unit is configured to: when a current that charges the second battery in the second charging branch is less than the second preset threshold, first decrease resistance values of some or all of the N1 current control elements located between the second charger chip and the second battery, and then decrease resistance values of some or all of the N2 current control elements located between the second charger chip and the charging interface, to cause a difference between an adjusted current that charges the second battery in the second charging branch and the second preset threshold to be less than the preset value; or the control unit is configured to: when a current that charges the second battery in the second charging branch is less than the second preset threshold, first decrease resistance values of some or all of the N1 current control elements located between the second charger chip and the second battery, to cause an adjusted current that charges the second battery in the second charging branch to be greater than the second preset threshold, and then increase resistance values of some or all of the N2 current control elements located between the second charger chip and the charging interface, to cause a difference between an adjusted current that charges the second battery in the second charging branch and the second preset threshold to be less than the preset value. In this way, a charging process can be made safe, and battery performance can be protected from impairment. In addition, a high charging speed of the second battery can be achieved, so that the charging is completed in a short time, thereby improving user experience.

In a possible implementation, a battery capacity of the first battery is less than a battery capacity of the second battery, and respective tolerable maximum currents of the first battery and the second battery are positively correlated with the respective battery capacities of the first battery and the second battery. In this way, a quantity of current control elements in the circuit of the foldable electronic device can be effectively limited, and heat consumption generated by the current control elements can be reduced.

In a possible implementation, the control unit is configured to increase, when a current that charges the first battery in the first charging branch is greater than the first preset threshold, resistance values of some or all of the M current control elements, to cause a difference between an adjusted first ratio and a second ratio is less than a third preset value; and the first ratio is a ratio of a current that charges the first battery in the first charging branch to a current that charges the second battery in the second charging branch, and the second ratio is a ratio of the battery capacity of the first battery to the battery capacity of the second battery. In this way, the control unit controls the current control elements, so that a ratio of the current that charges the first battery to the current that charges the second battery is close to a capacity ratio of the two batteries, which can ensure the safety of the two batteries during the charging, and improve the charging speed of the batteries.

According to a second aspect, an embodiment of this application provides a method for controlling a foldable electronic device. The method includes: gauging a current that charges the first battery in the first charging branch; and increasing, by the control unit, resistance values of some or all of the M current control elements when a current that charges the first battery in the first charging branch is greater than a first preset threshold, to cause an adjusted current that charges the first battery in the first charging branch to be less than or equal to the first preset threshold.

In a possible implementation, the control unit decreases, when a current that charges the first battery in the first charging branch is less than the first preset threshold, resistance values of some or all of the M current control elements, to cause a difference between an adjusted current that charges the first battery in the first charging branch and the first preset threshold to be less than a first preset value.

In a possible implementation, the second charging branch includes N current control elements, where N is a positive integer; and the control unit decreases, when a current that charges the second battery in the second charging branch is less than a second preset threshold, resistance values of some or all of the N current control elements, to cause a difference between an adjusted current that charges the second battery in the second charging branch and the second preset threshold to be less than a second preset value; or the control unit increases, when a current that charges the second battery in the second charging branch is greater than a second preset threshold, resistance values of some or all of the N current control elements, to cause an adjusted current that charges the second battery in the second charging branch to be less than or equal to the second preset threshold.

According to a third aspect, an embodiment of this application provides a computer-readable storage medium, storing a computer program. The computer program, when being executed by a processor, implements the method according to the second aspect.

According to a fourth aspect, an embodiment of this application provides a computer program product. The computer program product includes a computer program, and the computer program, when being run, causes a computer to perform the method according to the second aspect.

According to a fifth aspect, an embodiment of this application provides a chip. The chip includes a processor, and the processor is configured to call a computer program in a memory to perform the method according to the second aspect.

It should be understood that, the second aspect to the fifth aspect of this application correspond to the technical solution of the first aspect of this application, and the beneficial effects obtained by each aspect and the corresponding feasible implementations are similar. Details are not described herein again.

### BRIEF DESCRIPTION OF DRAWINGS

FIG. 1 is a schematic diagram of a resistance variable element according to an embodiment of this application;
FIG. 2 is a schematic structural diagram of a foldable electronic device in an unfolded state according to an embodiment of this application;
FIG. 3 is a schematic diagram of a circuit structure of a foldable electronic device in some implementations;
FIG. 4 is a schematic diagram of a hardware system structure of a foldable electronic device according to an embodiment of this application;
FIG. 5 is a schematic diagram of a circuit of a foldable electronic device according to an embodiment of this application.
FIG. 6 is a schematic diagram of a position of a current control element according to an embodiment of this application;
FIG. 7 is a schematic diagram of a position of another current control element according to an embodiment of this application;
FIG. 8 is a schematic diagram of a position of another current control element according to an embodiment of this application;
FIG. 9 is a schematic diagram of a hardware structure of an electronic device according to an embodiment of this application.

### DESCRIPTION OF EMBODIMENTS

For ease of describing the technical solutions in the embodiments of this application clearly, some terms and technologies involved in the embodiments of this application are briefly introduced below:

### 1. Current control element

The current control element is an element configured to control a current. For example, the current control element may be an element that controls a current by regulating a voltage, or may be a resistance variable element that controls a current by regulating a resistance.

### 2. Resistance variable element

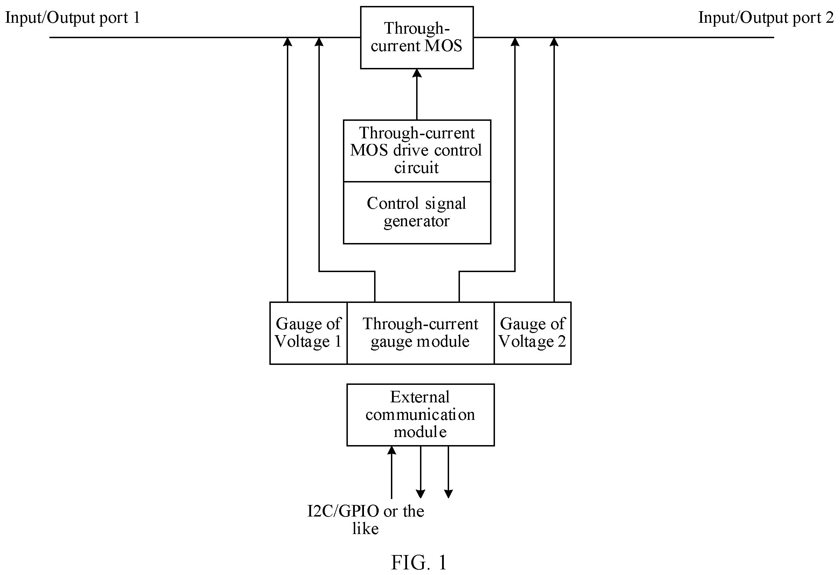

The resistance variable element is a circuit element with a variable resistance value. For example, FIG. 1 is a schematic structural diagram of a possible resistance variable element. As shown in FIG. 1, in the embodiments of this application, the resistance variable element may include an external communication module, a control signal generator, a through-current MOS drive circuit, a through-current MOS, a through-current gauge module, a voltage gauge module, and the like.

The through-current gauge module is configured to gauge a value of a current flowing through the resistance variable element, and the voltage gauge module is configured to gauge a value of a voltage between two ends of the resistance variable element.

The external communication module may obtain a signal sent by another module in the circuit, for example, a control signal sent by a control unit, through inter-integrated circuit (inter-integrated circuit, I2C) communication, general-purpose input/output (general-purpose input/output, GPIO) communication, or the like. The control signal generator is configured to generate a regulation signal according to the control signal obtained by the external communication module, and send the regulation signal to the through-current MOS drive control circuit. The through-current MOS drive control circuit generates a drive signal according to the obtained regulation signal. Based on a duty cycle of the generated drive signal, the drive circuit may control the through-current MOS to work in a cut-off region, a linear region (which may also be referred to as a resistance variable region), and a saturation region separately.

The duty cycle refers to a proportion of time that a high-level pulse in one pulse period occupies in the entire pulse period. For example, a duty cycle of a drive signal of a 1-second high-level pulse and a 1-second low-level pulse is 50%.

When the duty cycle of the drive signal is 100%, that is, when the drive signal is a continuous high-level signal, the through-current MOS works in the saturation region. When the duty cycle of the control signal is less than or equal to a specific value (for example, 35%), the through-current MOS works in the cut-off region. When the duty cycle of the control signal is greater than a specific value (for example, 35%) and less than 100%, the through-current MOS works in the linear region and the saturation region, and the resistance value of the through-current MOS is variable.

It may be understood that, the resistance variable element may include more modules than the foregoing modules, or the resistance variable element may have one or more of the foregoing modules omitted. This is not specifically limited in the embodiments of this application.

### 3. Term

For ease of describing the technical solutions in the embodiments of this application clearly, in the embodiments of this application, the word "exemplary" or "for example" is used for representing giving an example, an illustration, or a description. Any embodiment or design scheme described as an "exemplary" or "for example" in this application should not be explained as being more preferred or having more advantages than another embodiment or design scheme. In particular, the terms such as "exemplary" and "example" as used herein are intended to present the related concept in a specific implementation.

In the embodiments of this application, "at least one" means one or more and "a plurality of" means two or more. And/or describes an association relationship for describing associated objects and represents that three relationships may exist. For example, A and/or B may represent the following three cases: only A exists, both A and B exist, and only B exists, where A and B may be singular or plural. The character "/" generally indicates an "or" relationship between the associated objects. "At least one of the following items" or a similar expression means any combination of these items, including a single item or any combination of a plurality of items. For example, at least one of a, b, or c may represent: a, b, c, a-b, a-c, b-c, or a-b-c, where a, b, and c may be single or multiple.

It should be noted that in this embodiment of this application, "when ... " may be an instantaneous occurrence time of a case, or may be a period of time after occurrence of a case, which is not specifically limited in this embodiment of this application. In addition, a display interface provided in the embodiments of this application is only used as an example, and the display interface may further include more or less content.

### 4. Foldable electronic device

The foldable electronic device provided in the embodiments of this application may alternatively be a terminal device having a foldable form. For example, the foldable electronic device may include a handheld device or an in-vehicle device having an image processing function. For example, some foldable electronic devices are: a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device and a computing device with a wireless communication function, another processing device, a vehicle-mounted device, or a wearable device connected to a wireless modem, a terminal device in a 5G network, or a terminal device in a future evolved public land mobile communication network (public land mobile network, PLMN). This is not limited in embodiments of this application.

By way of example but not limitation, in the embodiments of this application, the foldable electronic device may also be a wearable device. The wearable device may also be referred to as a wearable smart device, and is a collective term for wearable devices developed by intelligently designing daily wearing based on a wearable technology, for example, glasses, gloves, a watch, clothing, and shoes. The wearable device is a portable device that is directly worn on a human body or integrated into a user's clothing or accessory. A wearable device is not merely a hardware device, but is used to implement a powerful function through software support, data exchange, and cloud interaction. Generalized wearable smart devices include full-featured and large-size devices that can implement complete or partial functions without depending on smartphones, such as smart watches or smart glasses, and devices that focus on only one type of application and need to work with other devices such as smartphones, for example, various smart bracelets or smart jewelry for monitoring physical signs.

In addition, in the embodiments of this application, the foldable electronic device may also be a terminal device in the Internet of Things (Internet of Things, IoT) system. The IoT is an important component of the future development of the information technology, and its main technical feature is connecting things to the network using the communication technologies, so as to implement an intelligent network of human-machine interconnection and interconnection of things.

In the embodiments of this application, the electronic device or each network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more computer operating systems for implementing service processing through a process (process), for example, a Linux operating system, a Unix operating system, an Android operating system, an iOS operating system, or a Windows operating system. The application layer includes applications such as a browser, an address book, word processing software, and instant messaging software.

It may be understood that, the embodiments of this application impose no limitation on a specific technology and a specific device form used by the foldable electronic device.

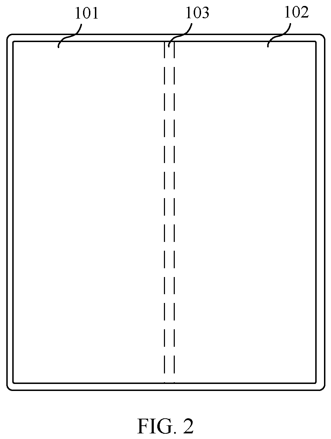

For example, FIG. 2 is a schematic structural diagram of a foldable electronic device in an unfolded state according to an embodiment of this application.

As shown in FIG. 2, the foldable electronic device may include a first folding portion 101, a second folding portion 102, and a rotation mechanism 103 located between the first folding portion 101 and the second folding portion 102. The rotation mechanism 103 may be a rotating shaft. The rotation mechanism 103 is connected to the first folding portion 101 and the second folding portion 102 separately, and the first folding portion 101 and the second folding portion 102 are located on two sides of the rotation mechanism 103 respectively. For example, the first folding portion 101 is located on a left side of an axis of the rotation mechanism 103, and the second folding portion 102 is located on a right side of the axis of the rotation mechanism 103. The first folding portion 101 and the second folding portion 102 can rotate around the axis of the rotation mechanism 103 separately.

It should be noted that, the foldable electronic device shown in FIG. 2 is described by using an example in which a first folding portion and a second folding portion of a foldable phone are distributed left and right. In a specific implementation, there may be another distribution manner, for example, a manner in which the first folding portion and the second folding portion are distributed up and down. Certainly, the foldable electronic device in this embodiment of this application may alternatively be another foldable device. This is not specifically limited in this embodiment of this application.

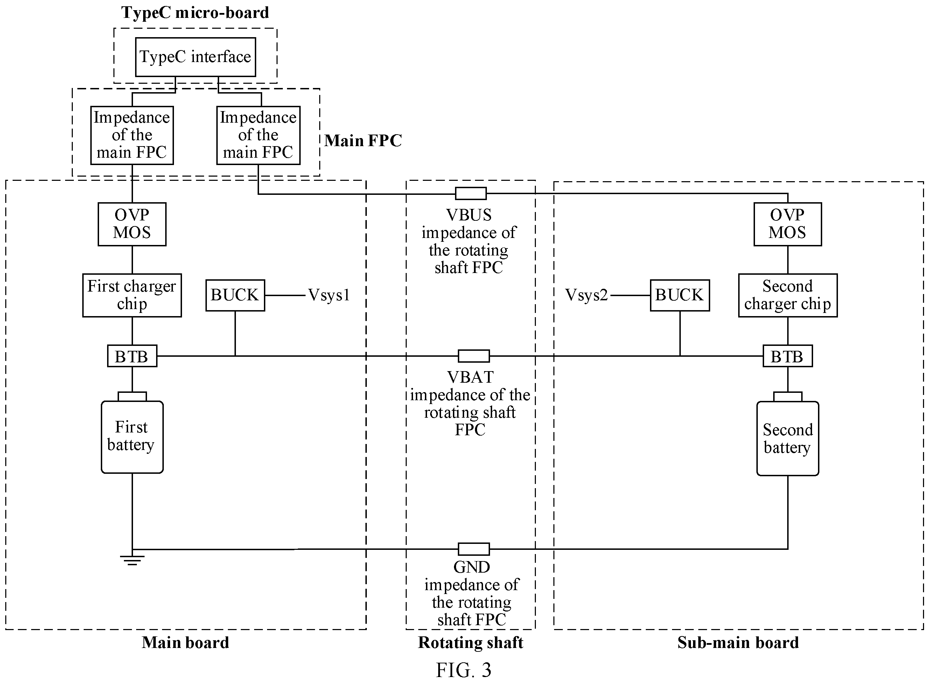

FIG. 3 is a schematic diagram of a circuit structure of a foldable electronic device in some implementations. As shown in FIG. 3, the circuit structure of the foldable electronic device may include a main board, a sub-main board, and flexible printed circuits (flexible printed circuit, FPC). In a possible implementation, the main board is arranged on a first folding portion, the sub-main board is arranged on a second folding portion, an FPC is arranged on a rotating shaft, wiring is distributed on the FPC on the rotating shaft, and electrical signal transmission is performed between the main board and the sub-main board by using the wiring.

A TypeC micro-board may be soldered or carried on the main board. The TypeC micro-board includes a TypeC interface. The terminal device may be connected to an external power supply through the TypeC interface, to charge a battery of the terminal device. Both between the main board of the terminal device and the TypeC interface and between the sub-main board and the TypeC interface, a connection may be made through an FPC, to perform electrical signal transmission.

For ease of description, the FPC on the rotating shaft may be referred to as a rotating shaft FPC, and the FPC between each of the main board the sub-main board and the TypeC interface may be referred to as a main FPC.

A first battery can be arranged on the main board, and a second battery can be arranged on the sub-main board. The first battery can be mounted onto the main board through a board-to-board connector (board-to-board connectors, BTB), and the second battery can be mounted onto the sub-main board through a BTB connector. After the foldable electronic device is connected to a charger, the charger charges the two batteries separately, or it may be understood that the two batteries are charged in parallel. In addition, an over voltage protection (over voltage protect, OVP) circuit, a first charger chip, and the like may be further arranged on the main board, and an OVP circuit, a second charger chip, and the like are further arranged on the sub-main board. The OVP circuit is configured to limit an input voltage within a safe range. When an over voltage phenomenon occurs, the over voltage protection circuit protects a post-stage powered device from impairment. The first charger chip and the second charger chip may be switched capacitor (switched capacitor, SC) charger chips. Both the first charger chip and the second charger chip can achieve an effect of halving an output voltage and doubling an output current, thereby implementing fast charging of the terminal device.

Each of the first battery and the second battery may be discharged through a direct current-direct current conversion circuit (for example, a BUCK circuit shown in FIG. 3), to convert a direct current outputted by the battery into a direct current (for example, a system voltage Vsys shown in FIG. 3) applicable to an operating circuit of the terminal device.

It should be noted that, in a specific implementation, other more micro electronic devices, application chips, circuits, modules, and the like can be further soldered/carried on the main board and the sub-main board. This is not specifically limited in this embodiment of this application.

It may be understood that, the TypeC interface is close to the battery on the main board, resulting in a low charging path loss, and the TypeC interface is far away from the battery on the sub-main board, resulting in a high charging path loss. Therefore, when the first battery and the second battery are charged, a charging current flowing through the first battery is large, a charging current flowing through the second battery is small, and the first battery is prone to phenomena such as battery overheating and battery deformation, resulting in impaired battery performance.

In view of this, the embodiments of this application provide a foldable electronic device and a control method. By arranging a resistance variable element at one or more positions in a charging circuit of a foldable electronic device, when a current of a branch where a battery on a main board is located is large, a resistance value of a corresponding resistance variable element may be increased based on a control signal sent by a control unit, to reduce the current of the branch. In this way, the current of the branch may not exceed a maximum charging current of the battery, to avoid phenomena such as battery overheating and battery deformation, thereby protecting battery performance.

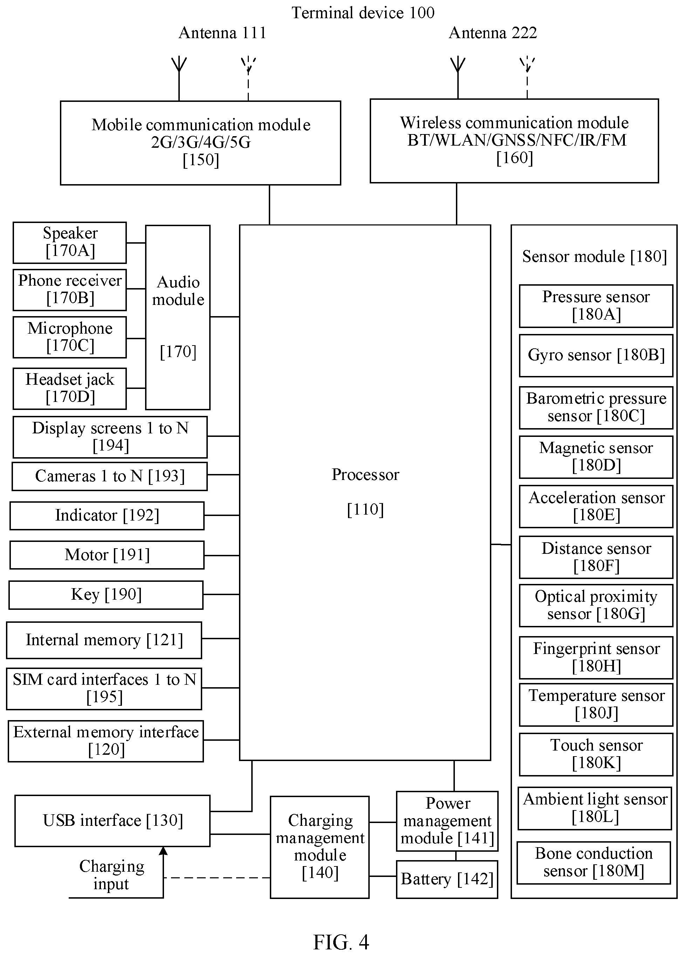

For example, FIG. 4 is a schematic structural diagram of a foldable electronic device 100 according to an embodiment of this application.

The foldable electronic device 100 may include a processor 110, an external memory interface 120, an internal memory 121, a universal serial bus (universal serial bus, USB) interface 130, a charging management module 140, a power management module 141, a battery 142, an antenna 111, an antenna 222, a mobile communications module 150, a wireless communications module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that, the structure shown in this embodiment of the present invention does not constitute a specific limitation on the foldable electronic device 100. In some other embodiments of this application, the foldable electronic device 100 may include more or fewer components than those shown in the figure, or some components may be combined, or some components may be split, or a different component deployment may be used. The components in the figure may be implemented by hardware, software or a combination of software and hardware.

The processor 110 may include one or more processing units. For example, the processor 110 may include a system on chip (system on chip, SOC) control chip, an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operating control signal according to an instruction operation code and a sequence signal, to complete control of fetching and executing an instruction.

The processor 110 may further be configured with a memory configured to store an instruction and data. In some embodiments, the memory in the processor 110 is a cache memory. The memory may store an instruction or data that is just used or used cyclically by the processor 110. If the processor 110 needs to use the instruction or the data again, the processor may directly invoke the instruction or the data from the memory, to avoid repeated access, and reduce a waiting time of the processor 110, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be coupled to the touch sensor 180K, a charger, a flash, the camera 193, and the like by using different I2C bus interfaces respectively. For example, the processor 110 may be coupled to the touch sensor 180K by using the I2C interface, so that the processor 110 communicates with the touch sensor 180K by using the I2C bus interface, to implement a touch function of the foldable electronic device 100.

The I2S interface may be configured to perform audio communication. In some embodiments, the processor 110 may include a plurality of groups of I2S buses. The processor 110 may be coupled to the audio module 170 through the I2S bus to implement communication between the processor 110 and the audio module 170. In some embodiments, the audio module 170 may transfer an audio signal to the wireless communication module 160 by using the I2S interface, to implement a function of answering a call by using a Bluetooth headset.

The PCM interface may also be used for audio communication, and samples, quantizes, and encodes an analog signal. In some embodiments, the audio module 170 may be coupled to the wireless communication module 160 by using the PCM bus interface. In some embodiments, the audio module 170 may also transfer an audio signal to the wireless communication module 160 by using the PCM interface, to implement a function of answering a call by using a Bluetooth headset. Both the I2S interface and the PCM interface can be used for audio communication.

The UART interface is a universal serial data bus and is used for asynchronous communication. The bus may be a two-way communications bus. The bus converts to-be-transmitted data between serial communication and parallel communication. In some embodiments, the UART interface is generally configured to connect the processor 110 to the wireless communication module 160. For example, the processor 110 communicates with a Bluetooth module in the wireless communication module 160 by using a UART interface, to implement a Bluetooth function. In some embodiments, the audio module 170 may transfer an audio signal to the wireless communication module 160 by using a UART interface, to implement a function of playing music by using a Bluetooth headset.

The MIPI interface may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the foldable electronic device 100. The processor 110 communicates with the display screen 194 by using the DSI interface, to implement a display function of the foldable electronic device 100.

The GPIO interface may be configured through software. The GPIO interface may be configured as a control signal, or may be configured as a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an I2C interface, an I2S interface, a UART interface, a MIPI interface, or the like.

The USB interface 130 is an interface that complies with the USB standard specification, and may be specifically a Mini USB interface, a Micro USB interface, a USB TypeC interface, and the like. The USB interface 130 may be configured to be connected to the charger to charge the foldable electronic device 100, or may be used for data transmission between the foldable electronic device 100 and the peripheral device, or may be configured to be connected to a headset, to play audio by using the headset. The interface may alternatively be configured to be connected to another electronic device such as an AR device.

It may be understood that, an interface connection relationship between the modules illustrated in this embodiment of the present invention is merely an example for description, and does not constitute a limitation on a structure of the foldable electronic device 100. In some other embodiments of this application, the foldable electronic device 100 may also adopt an interface connection manner different from that in the foregoing embodiment, or adopt a combination of a plurality of interface connection manners.

A wireless communication function of the foldable electronic device 100 may be implemented by using the antenna 111, the antenna 222, the mobile communications module 150, the wireless communications module 160, the modem processor, the baseband processor, and the like.

The charging management module 140 is configured to receive a charging input from a charger. The charger may be a wireless charger, or may be a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the foldable electronic device 100. The charging management module 140 may supply power to the electronic device by using the power management module 141 while charging the battery 142.

The power management module 141 is configured to be connected to the battery 142, the charging management module 140, and the processor 110. The power management module 141 receives an input of the battery 142 and/or the charging management module 140, to supply power to the processor 110, the internal memory 121, the display screen 194, the camera 193, the wireless communication module 160, and the like. The power management module 141 may be further configured to monitor parameters such as a battery capacity, a cycle count of a battery, and a battery health state (leakage and impedance). In some other embodiments, the power management module 141 may be alternatively arranged in the processor 110. In some other embodiments, the power management module 141 and the charging management module 140 may also be arranged in a same component.

In this embodiment of this application, at least one battery 142 is arranged on a main board of the foldable electronic device 100, and at least one battery 142 is also arranged on a sub-main board.

The foldable electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation, and is configured to render an image. The processor 110 may include one or more GPUs, and execute program instructions to generate or change display information. The display screen 194 is configured to display an image, display a video, receive a slide operation, and so on. In this embodiment of this application, the display screen 194 may be a bendable flexible screen.

The foldable electronic device 100 may further include a rotation mechanism such as a rotating shaft, and two folding portions of the foldable electronic device 100 may rotate around an axis of the rotation mechanism.

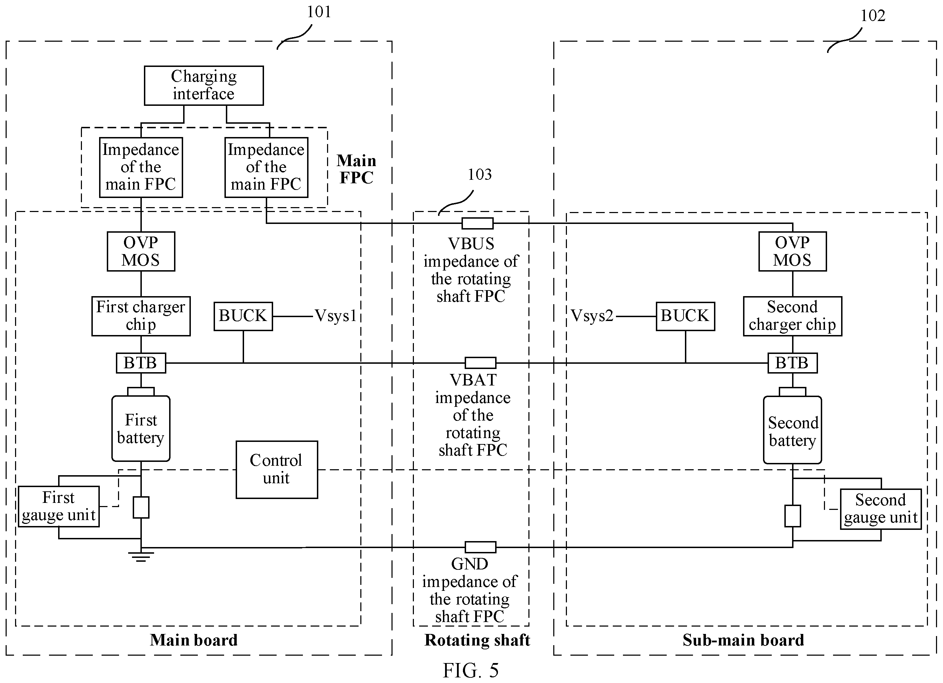

For example, FIG. 5 is a schematic diagram of a circuit of a foldable electronic device according to an embodiment of this application.

As shown in FIG. 5, the foldable electronic device 100 includes a first folding portion 101, a second folding portion 102, and a rotation mechanism 103 located between the first folding portion 101 and the second folding portion 102. The rotation mechanism 103 may be a rotating shaft. The first folding portion and the second folding portion are connected by the rotating shaft. A main board may be arranged in the first folding portion, and a sub-main board may be arranged in the second folding portion.
a first battery and a charging interface are arranged in the first folding portion, and a second battery is arranged in the second folding portion, where a first charging branch and a second charging branch are provided between the charging interface of the electronic device and a ground terminal of the electronic device, the first charging branch is located in the first folding portion, and the second charging branch is distributed in the first folding portion, the second folding portion, and the rotating shaft; and the first battery is in the first charging branch, and the second battery is in the second charging branch.

The charging interface may be a Mini USB interface, a Micro USB interface, a TypeC interface, or the like. This is not specifically limited in this embodiment of this application. When the foldable electronic device is in a charging state, the foldable electronic device may be connected to a charger through the charging interface, the charger charges the first battery through the first charging branch, and the charger charges the second battery through the second charging branch.

The charging interface is close to the first battery, resulting in a low charging path loss, and the charging interface is far away from the second battery, resulting in a high charging path loss. Therefore, when the charger charges the first battery and the second battery, a current that charges the first battery is large, and a current that charges the second battery is small. Compared with the second battery, the first battery is prone to phenomena such as battery overheating and battery deformation, and therefore battery performance is prone to impairment.

Therefore, a current control element may be arranged on the first charging branch, and the current that charges the first battery is reduced through the current control element, thereby reducing a possibility that the performance of the first battery is impaired due to the large current that charges the first battery.

The first charging branch may include M current control elements (not shown in FIG. 5), where M is a positive integer. That is to say, the first charging branch may include one or more current control elements. In this embodiment of this application, the current control element may be the resistance variable element shown in FIG. 1 or another element capable of controlling a current.

The foldable electronic device further includes a control unit. When a current that charges the first battery in the first charging branch is greater than a first preset threshold, the control unit increases resistance values of some or all of the M resistance variable elements, to cause an adjusted current that charges the first battery in the first charging branch to be less than or equal to the first preset threshold.

In this embodiment of this application, the control unit may be an SOC control chip. It may be understood that, the control unit may be arranged in the first folding portion. Certainly, the control unit may alternatively be arranged in the second folding portion according to an actual layout of the product, that is, the control unit may be arranged in the first folding portion 101 or the second folding portion 102.

The first preset threshold may be a rated charging current of the first battery. Charging the battery at the rated charging current can effectively shorten the charging time of the battery and improve the charging efficiency of the battery, and can further extend the service life of the battery and protect the performance of the battery from impairment.

Certainly, the first preset threshold may alternatively be a maximum charging current that the first battery can withstand and a value near the maximum charging current. This is not specifically limited in this embodiment of this application.

That is to say, when a charging current of a branch where a battery is located is large, a resistance value of a corresponding current control element may be increased based on a control signal sent by a control unit, to reduce the charging current of the branch. In this way, the charging current of the branch may not exceed a maximum charging current of the battery, to reduce generation of phenomena such as battery overheating and battery deformation, thereby protecting battery performance.

The first charging branch may further include a first gauge unit, the first gauge unit is located between the first battery and the ground terminal, and the first gauge unit is configured to gauge value of a current that charges the first battery. In this embodiment of this application, the first gauge unit may include a gauge (gauge) element and a resistor connected in parallel with the gauge element.

The first gauge unit may send the gauged value of the current that charges the first battery to the control unit through a GPIO interface, an I2C interface, or the like. The control unit increases resistance values of some or all of the M resistance variable elements according to the obtained value of the current that charges the first battery.

Based on the circuit shown in FIG. 5, during the charging, a principle that the foldable electronic device controls the current that charges the first battery is as follows:

The charging interface of the foldable electronic device is connected to the charger, and the charger may supply power to the first battery through the first charging branch and supply power to the second battery through the second charging branch. One or more current control elements are arranged in the first charging branch. The foldable electronic device gauges, by using the first gauge unit, a current that charges the first battery, and the control unit obtains, by using a GPIO interface, an I2C interface, or the like, the value of the current that charges the first battery and gauged by the first gauge unit. When value of a current that charges the first battery is greater than the preset threshold, the control unit may increase resistance values of some or all current control elements in the first charging branch, to reduce the current that charges the first battery until the value of the current that charges the first battery is less than or equal to the preset threshold.

In this way, the current that charges the first battery can be reduced, thereby avoiding phenomena such as battery overheating and battery deformation in the first battery, and protecting battery performance from impairment.

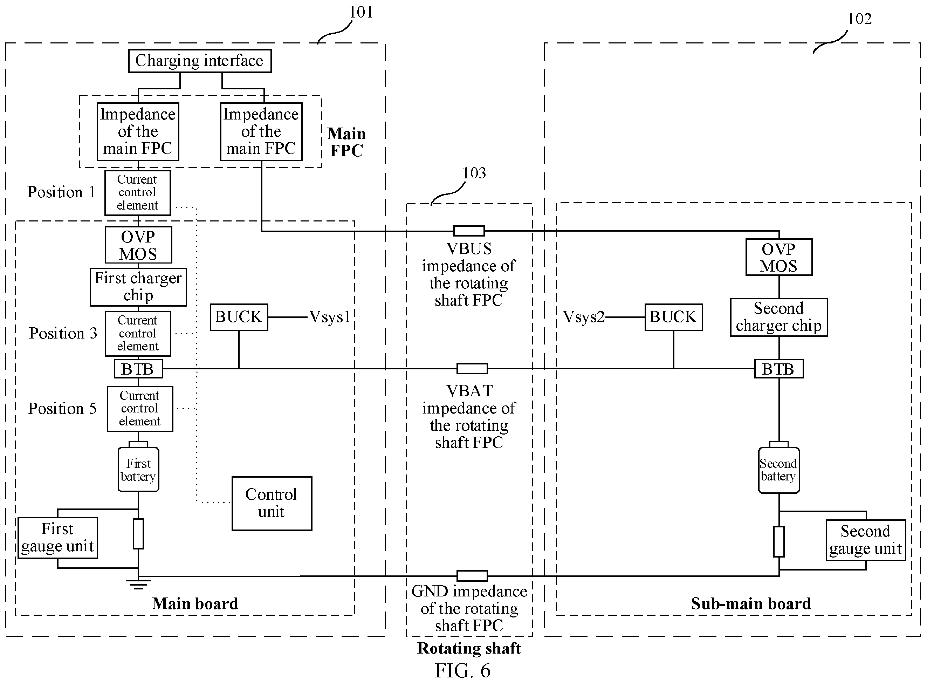

It should be noted that, there are a plurality of possible implementations for positions at which current control elements in the first branch can be arranged, and there may also be a plurality of possible implementations for the quantity of current control elements in the first branch. Several manners of arranging current control elements in the first branch are described below with reference to FIG. 6 to FIG. 8.

In a possible implementation, as shown in FIG. 6, the first charging branch further includes a first charger chip, the first charger chip is located between the charging interface and the first battery, and M1 current control elements of the M current control elements are located between the first charger chip and the first battery, where M1 is a positive integer less than or equal to M.

The first charger chip may be an SC charger chip, a half-voltage charge pump chip (2:1 charge pump), or the like. The first charger chip is configured to quickly charge the first battery. The first charger chip can achieve effects of halving an output voltage and doubling an output current. In other words, the output voltage of the first fast charging chip is about half of the input voltage of the first fast charging chip, and the output current of the first fast charging chip is about twice the input current of the first fast charging chip.

M1 current control elements of the M current control elements may be included between the first charger chip and the first battery. That is to say, the M current control elements on the first charging branch may be all placed between the first charger chip and the first battery or may have a part placed between the first charger chip and the first battery. This is not specifically limited in this embodiment of this application. For example, a total of three current control elements are placed on the first charging branch, and one, two, or three current control elements may be placed between the first charger chip and the first battery.

A control policy of the control unit for a current control element may be: controlling some of the M1 current control elements between the first charger chip and the first battery, to change resistance values of the some current control elements; or controlling the M1 current control elements between the first charger chip and the first battery, to change resistance values of the M1 current control elements. In a process in which the control unit controls current control elements, the control unit may simultaneously control the resistance values of the current control elements to change, or may sequentially control the resistance values of the current control elements to change. This is not specifically limited in this embodiment of this application.

In this way, a current control element is placed between the first charger chip and the first battery, so that the magnitude of the current that charges the first battery in the first charging branch can be effectively regulated.

In a possible implementation, the first charging branch further includes a first board-to-board connector, and the first board-to-board connector is located between the first charger chip and the first battery; and the M1 current control elements are located between the first charger chip and the first board-to-board connector; or the M1 current control elements are located between the first board-to-board connector and the first battery; or some of the M1 current control elements are located between the first charger chip and the first board-to-board connector, and some other of the M1 current control elements are located between the first board-to-board connector and the first battery.

The first board-to-board connector is configured to mount the first battery onto the main board. A position between the first charger chip and the first board-to-board connector may correspond to a position 3 shown in FIG. 6, and a position between the first board-to-board connector and the first battery may correspond to a position 5 shown in FIG. 6.

That is to say, the M1 current control elements included between the first charger chip and the first battery may be all at the position 3, or may be all at the position 5, or may have a part at the position 3 and have a remaining part at the position 5.

For example, two current control elements are included between the first charger chip and the first battery, and the two current control elements may be both at the position 3; or may be both at the position 5; or may have one at the position 3 and the other at the position 5.

It may be understood that, because the battery may generate heat during charging, the current control element located between the charger chip and the first board-to-board connector is far away from the battery and is located in a cold region (also referred to as a low-temperature region) of the foldable electronic device, and the current control element located between the first board-to-board connector and the first battery is close to the battery and is located in a hot region (also referred to as a heating concentration region) of the foldable electronic device, the position 3 is more friendly to the heat consumption of the foldable electronic device compared with the position 5.

A control policy of the control unit for a current control element may be: controlling some of the current controlling elements at the position 3 and/or at the position 5, to change resistance values of the some current control elements; or controlling all the current control elements at the position 3 and/or at the position 5, to change resistance values of the current control elements.

In a process in which the control unit controls current control elements, the control unit may simultaneously control the resistance values of the current control elements to change, or may sequentially control the resistance values of the current control elements to change. This is not specifically limited in this embodiment of this application.

In this way, a current control element is placed between the first charger chip and the first board-to-board connector, and/or a current control element is placed between the first board-to-board connector and the first battery, so that the magnitude of the current that charges the first battery in the first charging branch can be effectively regulated.

In a possible implementation, the first charging branch further includes a first charger chip, the first charger chip is located between the charging interface and the first battery, and M2 current control elements of the M current control elements are located between the first charger chip and the charging interface, where M2 is a positive integer less than or equal to M.

A position between the first charger chip and the charging interface may correspond to a position 1 shown in FIG. 6.

M2 current control elements of the M current control elements may be included between the first charger chip and the charging interface. That is to say, the M current control elements on the first charging branch may be all placed between the first charger chip and the charging interface or may have a part placed between the first charger chip and the charging interface. This is not specifically limited in this embodiment of this application. For example, a total of three current control elements are placed on the first charging branch, and one, two, or three current control elements may be placed between the first charger chip and the charging interface.

It may be understood that, M2 current control elements of the M current control elements may alternatively be located on a micro-board on which the charging interface is located, for example, a typeC micro-board on which the typeC interface is located.

A control policy of the control unit for a current control element may be: controlling some of the current controlling elements at the position 1, to change resistance values of the some current control elements; or controlling all the current control elements at the position 1, to change resistance values of the current control elements.

In a process in which the control unit controls current control elements, the control unit may simultaneously control the resistance values of the current control elements to change, or may sequentially control the resistance values of the current control elements to change. This is not specifically limited in this embodiment of this application.

In this way, a current control element is placed between the first charger chip and the charging interface, so that the magnitude of the current that charges the first battery in the first charging branch can be effectively regulated.

In a possible implementation, when a current that charges the first battery in the first charging branch is greater than the first preset threshold, the control unit first increases resistance values of some or all of the M1 current control elements located between the first charger chip and the first battery, and then increases resistance values of some or all of the M2 current control elements located between the first charger chip and the charging interface, to cause an adjusted current that charges the first battery in the first charging branch to be less than or equal to the first preset threshold.

Alternatively, when a current that charges the first battery in the first charging branch is greater than the first preset threshold, the control unit first increases resistance values of some or all of the M1 current control elements located between the first charger chip and the first battery, to cause an adjusted current that charges the first battery in the first charging branch to be less than or equal to the first preset threshold, and then decreases resistance values of some or all of the M2 current control elements located between the first charger chip and the charging interface, to cause a difference between an adjusted current that charges the first battery in the first charging branch and the first preset threshold to be less than the first preset value.

It may be understood that, because the first charger chip can achieve an effect of doubling the output current, a current control element located in a post-stage of the first charger chip, that is, a current control element located between the first charger chip and the first battery, has a better current regulation effect than a current control element located in a pre-stage of the first charger chip, that is, a current control element located between the charging interface and the first charger chip. For example, a resistance value of the current control element located between the charging interface and the first charger chip changes by R, and a corresponding regulated current value may be K; and a resistance value of the current control element located between the first charger chip and the ground terminal changes by R, and a corresponding regulated current value may be 4K. It should be noted that, K and 4K are exemplary values. Therefore, based on the foregoing characteristics, the resistance value of the current control element located between the first charger chip and the first battery may be first controlled to change, to implement coarse adjustment, and then the resistance value of the current control element located between the charging interface and the first charger chip may be controlled to change, to implement fine adjustment.

That is to say, when a current that charges the first battery in the first charging branch is greater than the first preset threshold, the control unit may first increase resistance values of some or all of the M1 current control elements located between the first charger chip and the first battery, and reduce the current that charges the first battery through coarse adjustment, to cause the current that charges the first battery to be close to the first preset threshold, but still greater than the first preset threshold; and the control unit then increases resistance values of some or all of the M2 current control elements located between the first charger chip and the charging interface, to cause a difference between an adjusted current that charges the first battery in the first charging branch and the first preset threshold to be less than or equal to the first preset threshold through fine adjustment.

Alternatively, when a current that charges the first battery in the first charging branch is greater than the first preset threshold, the control unit first increases resistance values of some or all of the M1 current control elements located between the first charger chip and the first battery, to cause an adjusted current that charges the first battery in the first charging branch to be less than the first preset threshold through coarse adjustment, but have a large difference with the first preset threshold; and the control unit then decreases resistance values of some or all of the M2 current control elements located between the first charger chip and the charging interface, to cause a difference between an adjusted current that charges the first battery in the first charging branch and the first preset threshold to be less than the preset value through fine adjustment.

By first coarse adjustment and then fine adjustment of the current that charges the first battery, the current value can be regulated at a smaller granularity, so that the regulation effect on the current is more accurate and the current can be further closer to the rated charging current of the battery. In this way, a charging process can be made safe, and battery performance can be protected from impairment. In addition, a high charging speed of the first battery can be achieved, so that the charging is completed in a short time, thereby improving user experience.

It should be noted that, in the foregoing embodiment, an example in which the current that charges the first battery in the first charging branch is greater than the first preset threshold is used for description. In a possible implementation, the control unit decreases, when a current that charges the first battery in the first charging branch is less than the first preset threshold, resistance values of some or all of the M current control elements, to cause a difference between an adjusted current that charges the first battery in the first charging branch and the first preset threshold to be less than a first preset value.

The first preset value may be a difference between a preset current of the first battery and the first preset threshold, and the first preset value may be a small value, for example, any value ranging from 0 A to 0.02 A. This is not specifically limited in this embodiment of this application.

In this embodiment of this application, when the current that charges the first battery in the first charging branch is less than the first preset threshold, it may be the case that the current that charges the first battery is less than the first preset threshold and a difference between the current that charges the first battery and the first preset threshold is large, for example, the difference between the current that charges the first battery and the first preset threshold is greater than 0.1 A.

That is to say, when the control unit learns that a current that charges the first battery and that is gauged by the first gauge unit is less than the first preset threshold, the control unit may send a control signal used to decrease a resistance value of a current control element to some or all of the M current control elements in the first charging branch, so that value of a current that charges the first battery in the first charging branch increases until the current that charges the first battery is close to the first preset threshold.

In this way, a high charging speed of the first battery can be achieved, the user experience is improved, and the charging process can be made safe.

It may be understood that, there may also be an excessively large or excessively small current in the second charging branch, and the current of the second charging branch can also be adjusted in this embodiment of this application.

In a possible implementation, the second charging branch includes N current control elements, where N is a positive integer. That is to say, the second charging branch may include one or more current control elements.

The control unit decreases, when a current that charges the second battery in the second charging branch is less than a second preset threshold, resistance values of some or all of the N current control elements, to cause a difference between an adjusted current that charges the second battery in the second charging branch and the second preset threshold to be less than a second preset value.

For the second preset threshold, reference may be made to the descriptions of the first preset threshold. Details are not described again in this embodiment of this application.

The second preset value may be a difference between a preset current of the second battery and the second preset threshold, and the second preset value may be a small value, for example, any value ranging from 0 A to 0.02 A. This is not specifically limited in this embodiment of this application.

It may be understood that, in this embodiment of this application, when the current that charges the second battery in the second charging branch is less than the second preset threshold, it may be the case that the current that charges the second battery is less than the second preset threshold and a difference between the current that charges the second battery and the second preset threshold is large, for example, the difference between the current that charges the second battery and the second preset threshold is greater than 0.1 A.

That is to say, when a current that charges the second battery is less than the second preset threshold, the control unit may send a control signal used to decrease a resistance value of a current control element to some or all of the N current control elements in the second charging branch, so that value of a current that charges the second battery in the second charging branch increases until the current that charges the second battery is close to the second preset threshold.

In this way, a high charging speed of the second battery can be achieved, the user experience is improved, and the charging process can be made safe.

In another possible implementation, the control unit increases, when a current that charges the second battery in the second charging branch is greater than a second preset threshold, resistance values of some or all of the N current control elements, to cause an adjusted current that charges the second battery in the second charging branch to be less than or equal to the second preset threshold.

That is to say, when a charging current of a branch where the second battery is located is large, a resistance value of a corresponding current control element may be increased based on a control signal sent by a control unit, to reduce the charging current of the branch. In this way, the charging current of the branch may not exceed a maximum charging current of the second battery, to reduce generation of phenomena such as battery overheating and battery deformation, thereby protecting battery performance.

The second charging branch may further include a second gauge unit, the second gauge unit is located between the second battery and the ground terminal, and the second gauge unit is configured to gauge value of a current that charges the second battery. In this embodiment of this application, the second gauge unit may include a gauge (gauge) element and a resistor connected in parallel with the gauge element.

The second gauge unit may send the gauged value of the current that charges the second battery to the control unit through a GPIO interface, an I2C interface, or the like. The control unit increases or decreases resistance values of some or all of the N resistance variable elements according to the obtained value of the current that charges the second battery.

Based on the circuit shown in FIG. 5, during the charging, a principle that the foldable electronic device controls the current that charges the second battery is as follows:

The charging interface of the foldable electronic device is connected to the charger, and the charger may supply power to the first battery through the first charging branch and supply power to the second battery through the second charging branch. One or more current control elements are arranged in the second charging branch. The foldable electronic device gauges, by using the second gauge unit, a current that charges the second battery, and the control unit obtains, by using a GPIO interface, an I2C interface, or the like, the value of the current that charges the second battery and gauged by the second gauge unit. When value of a current that charges the second battery is less than the preset threshold, the control unit may decrease resistance values of some or all current control elements in the second charging branch, to increase the current that charges the second battery until the value of the current that charges the second battery is close to the second preset threshold. Alternatively, when value of a current that charges the second battery is greater than the preset threshold, the control unit may increase resistance values of some or all current control elements in the second charging branch, to reduce the current that charges the second battery until the value of the current that charges the second battery is less than or equal to the preset threshold.

In this way, a high charging speed of the second battery can be achieved, thereby improving user experience. In addition, a charging process can be made safe, phenomena such as battery overheating and battery deformation in the second battery is avoided, and battery performance is protected.

In a possible implementation, the second charging branch further includes a second charger chip, the second charger chip is located between the charging interface and the second battery, and N1 current control elements of the N current control elements are located between the second charger chip and the second battery, where N1 is a positive integer less than or equal to N.

For the second charger chip, reference may be made to the related descriptions of the first charger chip. Details are not described again in this embodiment of this application.

N1 current control elements of the N current control elements may be included between the second charger chip and the second battery. That is to say, the N current control elements on the second charging branch may be all placed between the second charger chip and the second battery or may have a part placed between the second charger chip and the second battery. This is not specifically limited in this embodiment of this application. For example, a total of two current control elements are placed on the second charging branch, and one or two current control elements may be placed between the second charger chip and the second battery.

A control policy of the control unit for a current control element may be: controlling some of the N1 current control elements between the second charger chip and the second battery, to change resistance values of the some current control elements; or controlling the N1 current control elements between the second charger chip and the second battery, to change resistance values of the N1 current control elements. In a process in which the control unit controls current control elements, the control unit may simultaneously control the resistance values of the current control elements to change, or may sequentially control the resistance values of the current control elements to change. This is not specifically limited in this embodiment of this application.

In this way, a current control element is placed between the second charger chip and the second battery, so that the magnitude of the current that charges the first battery in the second charging branch can be effectively regulated.

In a possible implementation, the second charging branch further includes a second board-to-board connector, and the second board-to-board connector is located between the second charger chip and the second battery; and the N1 current control elements are located between the second charger chip and the second board-to-board connector; or the N1 current control elements are located between the second board-to-board connector and the second battery; or some of the N1 current control elements are located between the second charger chip and the second board-to-board connector, and some other of the N1 current control elements are located between the second board-to-board connector and the second battery.

For the second board-to-board connector, reference may be made to the related descriptions of the first board-to-board connector. Details are not described again in this embodiment of this application.

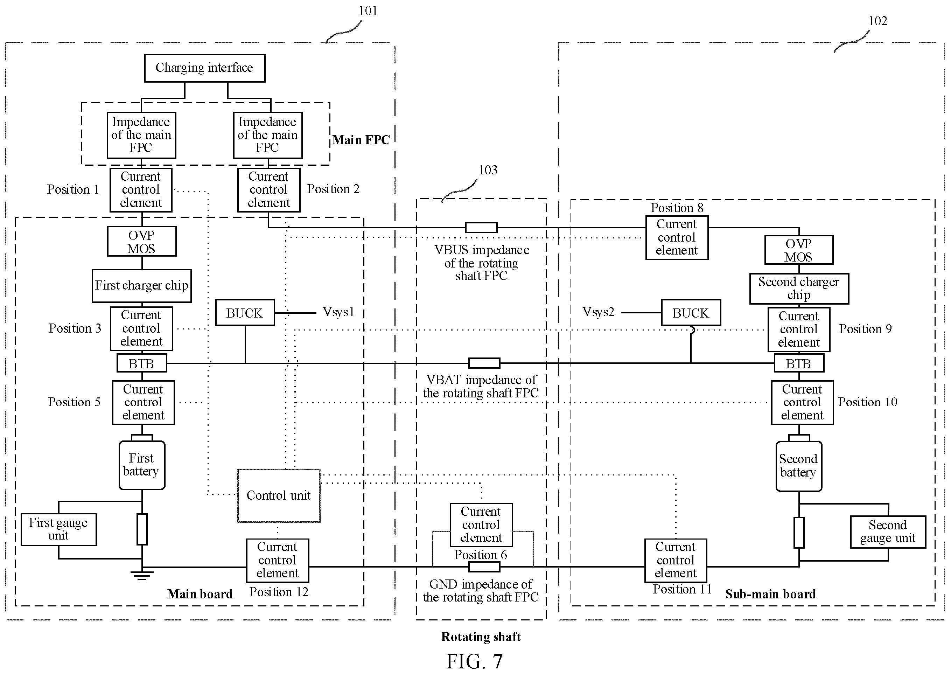

A position between the second charger chip and the second board-to-board connector may correspond to a position 9 shown in FIG. 7, and a position between the second board-to-board connector and the second battery may correspond to a position 10 shown in FIG. 7.

That is to say, the N1 current control elements included between the second charger chip and the second battery may be all at the position 9, or may be all at the position 10, or may have a part at the position 9 and have a remaining part at the position 10.

For example, two current control elements are included between the second charger chip and the second battery, and the two current control elements may be both at the position 9; or may be both at the position 10; or may have one at the position 9 and the other at the position 10.

It may be understood that, because the battery may generate heat during charging, the current control element located between the charger chip and the second board-to-board connector is far away from the battery and is located in a cold region (also referred to as a low-temperature region) of the foldable electronic device, and the current control element located between the second board-to-board connector and the second battery is close to the battery and is located in a hot region (also referred to as a heating concentration region) of the foldable electronic device, the position 9 is more friendly to the heat consumption of the foldable electronic device compared with the position 10.

A control policy of the control unit for a current control element may be: controlling some of the current controlling elements at the position 9 and/or at the position 10, to change resistance values of the some current control elements; or controlling all the current control elements at the position 9 and/or at the position 10, to change resistance values of the current control elements.

In a process in which the control unit controls current control elements, the control unit may simultaneously control the resistance values of the current control elements to change, or may sequentially control the resistance values of the current control elements to change. This is not specifically limited in this embodiment of this application.

In this way, a current control element is placed between the second charger chip and the second board-to-board connector, and/or a current control element is placed between the second board-to-board connector and the second battery, so that the magnitude of the current that charges the second battery in the second charging branch can be effectively regulated.

In a possible implementation, N2 current control elements of the N current control elements are located between the second charger chip and the charging interface, where N2 is a positive integer less than or equal to N.

A position between the second charger chip and the charging interface may correspond to a position 2 or a position 8 shown in FIG. 7.

N2 current control elements of the N current control elements may be included between the second charger chip and the charging interface. That is to say, the N current control elements on the second charging branch may be all placed between the second charger chip and the charging interface or may have a part placed between the second charger chip and the charging interface. This is not specifically limited in this embodiment of this application. For example, a total of three current control elements are placed on the second charging branch, and one, two, or three current control elements may be placed between the second charger chip and the charging interface.

It may be understood that, N2 current control elements of the N current control elements may alternatively be located on a micro-board on which the charging interface is located, for example, a typeC micro-board on which the typeC interface is located.

A control policy of the control unit for a current control element may be: controlling some of the current control elements located between the second charger chip and the charging interface, to change resistance values of the some current control elements; or controlling all the current control elements located between the second charger chip and the charging interface, to change resistance values of the current control elements.

In a process in which the control unit controls current control elements, the control unit may simultaneously control the resistance values of the current control elements to change, or may sequentially control the resistance values of the current control elements to change. This is not specifically limited in this embodiment of this application.

In this way, a current control element is placed between the second charger chip and the charging interface, so that the magnitude of the current that charges the second battery in the second charging branch can be effectively regulated.

In a possible implementation, the N2 current controlling elements are located in the first folding portion; or the N2 current controlling elements are located in the second folding portion; or some of the N2 current controlling elements are located in the first folding portion, and some other of the N2 current controlling elements are located in the second folding portion.

A position between the second charger chip and the charging interface and in the first folding portion may correspond to a position 2 shown in FIG. 7. A position between the second charger chip and the charging interface and in the second folding portion may correspond to a position 8 shown in FIG. 7.

That is to say, the N2 current control elements included between the second charger chip and the charging interface may be all at the position 2, or may be all at the position 8, or may have a part at the position 2 and have a remaining part at the position 8.

For example, three current control elements are included between the second charger chip and the charging interface, and the three current control elements may be both at the position 2; or may be both at the position 8; or may have one at the position 2 and two others at the position 8, or have two at the position 2 and one other at the position 8.

A control policy of the control unit for a current control element may be: controlling some of the current controlling elements at the position 2 and/or at the position 8, to change resistance values of the some current control elements; or controlling all the current control elements at the position 2 and/or at the position 8, to change resistance values of the current control elements.

In a process in which the control unit controls current control elements, the control unit may simultaneously control the resistance values of the current control elements to change, or may sequentially control the resistance values of the current control elements to change. This is not specifically limited in this embodiment of this application.

In this way, a current control element is placed between the second charger chip and the charging interface and in the first folding portion, and/or a current control element is placed between the second charger chip and the charging interface and in the second folding portion, so that the magnitude of the current that charges the second battery in the second charging branch can be effectively regulated.

In a possible implementation, N3 current control elements are included between the second battery and the ground terminal, where N3 is a positive integer less than or equal to N.

A position between the second battery and the ground terminal may correspond to a position 6, a position 11, or a position 12 shown in FIG. 7.

N3 current control elements of the N current control elements may be included between the second battery and the ground terminal. That is to say, the N current control elements on the second charging branch may be all placed between the second battery and the ground terminal or may have a part placed between the second battery and the ground terminal. This is not specifically limited in this embodiment of this application. For example, a total of three current control elements are placed on the second charging branch, and one, two, or three current control elements may be placed between the second battery and the ground terminal.

A control policy of the control unit for a current control element may be: controlling some of the current control elements located between the second battery and the ground terminal, to change resistance values of the some current control elements; or controlling all the current control elements located between the second battery and the ground terminal, to change resistance values of the current control elements.

In a process in which the control unit controls current control elements, the control unit may simultaneously control the resistance values of the current control elements to change, or may sequentially control the resistance values of the current control elements to change. This is not specifically limited in this embodiment of this application.

In this way, a current control element is placed between the second battery and the ground terminal, so that the magnitude of the current that charges the second battery in the second charging branch can be effectively regulated.

In a possible implementation, the N3 current controlling elements are located on the first folding portion; or the N3 current controlling elements are located in the second folding portion; or the N3 current controlling elements are located in the rotating shaft; or some of the N3 current controlling elements are located in the first folding portion, some of the N3 current controlling elements are located in the second folding portion, and remaining current controlling elements of the N3 current controlling elements are located in the rotating shaft.

A position between the second battery and the ground terminal and in the first folding portion may correspond to a position 12 shown in FIG. 7. A position between the second battery and the ground terminal and in the second folding portion may correspond to a position 11 shown in FIG. 7. A position between the second battery and the ground terminal and in the rotating shaft may correspond to a position 6 shown in FIG. 7.

It may be understood that, a current control element that is located between the second battery and the ground terminal and that is in the rotating shaft may be connected to the second charging branch in a manner of being connected in parallel with a ground resistor in the rotating shaft.

That is to say, the N3 current control elements included between the second battery and the ground terminal may be all at the position 6, or all at the position 11, or all at the position 12; or may have a part at the position 6 and a remaining part at the position 11; or may have a part at the position 6 and a remaining part at the position 12; or may have a part at the position 11 and a remaining part at the position 12; or may have a part at the position 6, a part at the position 11, and a remaining part at the position 12.

A control policy of the control unit for a current control element may be: controlling some of the current controlling elements at the position 6, at the position 11, and/or at the position 12, to change resistance values of the some current control elements; or controlling all the current control elements at the position 6, at the position 11, and/or at the position 12, to change resistance values of the current control elements.

In a process in which the control unit controls current control elements, the control unit may simultaneously control the resistance values of the current control elements to change, or may sequentially control the resistance values of the current control elements to change. This is not specifically limited in this embodiment of this application.

In this way, the magnitude of the current that charges the second battery in the second charging branch can be effectively regulated.

In a possible implementation, the first charging branch includes the first board-to-board connector, the second charging branch includes a second board-to-board connector, and L current control elements are included between the first board-to-board connector and the second board-to-board connector, where L is a positive integer.

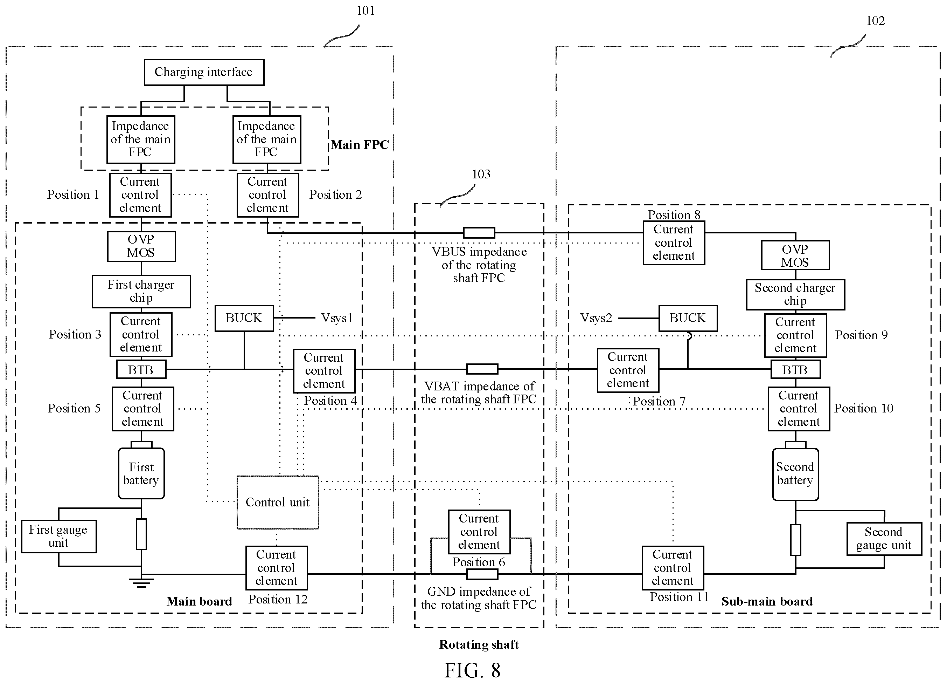

A position between the first board-to-board connector and the second board-to-board connector may correspond to a position 4 or a position 7 shown in FIG. 8.

It may be understood that, a flowing direction of a current on a branch between the first board-to-board connector and the second board-to-board connector is not fixed. When a voltage at the second board-to-board connector is higher than a voltage at the first board-to-board connector, a current flows to the first battery, and changing a resistance value of a current control element located between the first board-to-board connector and the second board-to-board connector and/or changing a resistance value of a current control element located between the charging interface and the second board-to-board connector in the second charging branch may affect value of a current that charges the first battery; and when a voltage at the first board-to-board connector is higher than a voltage at the second board-to-board connector, a current flows to the second battery, and changing a resistance value of a current control element located between the first board-to-board connector and the second board-to-board connector and/or changing a resistance value of a current control element between the charging interface and the first board-to-board connector may affect value of a current that charges the second battery.

It may be understood that, the current control element located between the first board-to-board connector and the second board-to-board connector may control, without being combined with the current control element in the first branch and/or the current control element in the second branch, the magnitude of the current that charges the first battery and/or the magnitude of the current that charges the second battery.

A control policy of the control unit for a current control element may be: controlling some of the current control elements located between the first board-to-board connector and the second board-to-board connector, to change resistance values of the some current control elements; or controlling all the current control elements located between the first board-to-board connector and the second board-to-board connector, to change resistance values of the current control elements.

In a process in which the control unit controls current control elements, the control unit may simultaneously control the resistance values of the current control elements to change, or may sequentially control the resistance values of the current control elements to change. This is not specifically limited in this embodiment of this application.

In this way, a current control element is placed between the first board-to-board connector and the second board-to-board connector, so that the magnitude of the current that charges the first battery or charges the second battery can be effectively regulated.

In a possible implementation, the L current controlling elements are located in the first folding portion; or the L current controlling elements are located in the second folding portion; or some of the L current controlling elements are located in the first folding portion, and some other of the L current controlling elements are located in the second folding portion.

A position between the first board-to-board connector and the second board-to-board connector and in the first folding portion may correspond to a position 4 shown in FIG. 8. A position between the first board-to-board connector and the second board-to-board connector and in the second folding portion may correspond to a position 7 shown in FIG. 8.

That is to say, the L current control elements included between the first board-to-board connector and the second board-to-board connector may be all at the position 4, or may be all at the position 7, or may have a part at the position 4 and have a remaining part at the position 7.

For example, three current control elements are included between the first board-to-board connector and the second board-to-board connector, and the three current control elements may be both at the position 4; or may be both at the position 7; or may have one at the position 4 and two others at the position 7, or have two at the position 4 and one other at the position 7.

A control policy of the control unit for a current control element may be: controlling some of the current controlling elements at the position 4 and/or at the position 7, to change resistance values of the some current control elements; or controlling all the current control elements at the position 4 and/or at the position 7, to change resistance values of the current control elements.

In a process in which the control unit controls current control elements, the control unit may simultaneously control the resistance values of the current control elements to change, or may sequentially control the resistance values of the current control elements to change. This is not specifically limited in this embodiment of this application.

In this way, a current control element is placed between the first board-to-board connector and the second board-to-board connector and in the first folding portion, and/or a current control element is placed between the first board-to-board connector and the second board-to-board connector and in the second folding portion, so that the magnitude of the current that charges the first battery or charges the second battery can be effectively regulated.

In a possible implementation, when a current that charges the second battery in the second charging branch is less than the second preset threshold, the control unit first decreases resistance values of some or all of the N1 current control elements located between the second charger chip and the second battery, and then decreases resistance values of some or all of the N2 current control elements located between the second charger chip and the charging interface, to cause a difference between an adjusted current that charges the second battery in the second charging branch and the second preset threshold to be less than the preset value.

Alternatively, when a current that charges the second battery in the second charging branch is less than the second preset threshold, the control unit first decreases resistance values of some or all of the N1 current control elements located between the second charger chip and the second battery, to cause an adjusted current that charges the second battery in the second charging branch to be greater than the second preset threshold, and then increases resistance values of some or all of the N2 current control elements located between the second charger chip and the charging interface, to cause a difference between an adjusted current that charges the second battery in the second charging branch and the second preset threshold to be less than the preset value.

It may be understood that, because the second charger chip can achieve an effect of doubling the output current, a current control element located in a post-stage of the second charger chip, that is, a current control element located between the second charger chip and the ground terminal, has a better current regulation effect than a current control element located in a pre-stage of the second charger chip, that is, a current control element located between the charging interface and the second charger chip. For example, a resistance value of the current control element located between the charging interface and the second charger chip changes by R, and a corresponding regulated current value may be K; and a resistance value of the current control element located between the second charger chip and the ground terminal changes by R, and a corresponding regulated current value may be 4K. It should be noted that, K and 4K are exemplary values. Therefore, based on the foregoing characteristics, the resistance value of the current control element located between the second charger chip and the ground terminal may be first controlled to change, to implement coarse adjustment, and then the resistance value of the current control element located between the charging interface and the second charger chip may be controlled to change, to implement fine adjustment.

That is to say, when a current that charges the second battery in the second charging branch is less than the second preset threshold, the control unit may first decrease resistance values of some or all of the N1 current control elements located between the second charger chip and the second battery, and increase the current that charges the second battery through coarse adjustment, to cause the current that charges the second battery to be close to the second preset threshold, but have a large difference with the second preset threshold; and the control unit then decreases resistance values of some or all of the N2 current control elements located between the second charger chip and the charging interface, to cause a difference between an adjusted current that charges the second battery in the second charging branch and the second preset threshold to be less than the preset value through fine adjustment, that is, the current that charges the second battery is very close to the second preset threshold.

Alternatively, when a current that charges the second battery in the second charging branch is less than the second preset threshold, the control unit first decreases resistance values of some or all of the N1 current control elements located between the second charger chip and the second battery, to cause an adjusted current that charges the second battery in the second charging branch to be greater than the second preset threshold through coarse adjustment; and the control unit then increases resistance values of some or all of the N2 current control elements located between the second charger chip and the charging interface, to cause a difference between an adjusted current that charges the second battery in the second charging branch and the second preset threshold to be less than the preset value through fine adjustment.

It may be understood that, the control units between the second charger chip and the ground terminal may include the control units between the second charger chip and the second battery, and may further include the control units between the second battery and the ground terminal.

By first coarse adjustment and then fine adjustment of the current that charges the second battery, the current value can be regulated at a smaller granularity, so that the regulation effect on the current is more accurate and the current can be further closer to the rated charging current of the battery. In this way, a charging process can be made safe, and battery performance can be protected from impairment. In addition, a high charging speed of the second battery can be achieved, so that the charging is completed in a short time, thereby improving user experience.

In a possible implementation, a battery capacity of the first battery is less than a battery capacity of the second battery, and respective tolerable maximum currents of the first battery and the second battery are positively correlated with the respective battery capacities of the first battery and the second battery.

It may be understood that, for the foldable electronic device, usually, there are a relatively large quantity of devices on the main board and a relatively small quantity of devices on the sub-main board. Therefore, the battery that can be placed on the main board has a small volume and also has a corresponding small battery capacity, and the battery that can be placed on the sub-main board has a large volume and also has a corresponding large battery capacity.

That maximum currents that batteries can withstand may be positively correlated with respective battery capacities means that when a battery capacity is large, a maximum current that a battery can withstand is also large, and conversely, when a battery capacity is small, a maximum current that a battery can withstand is also small. For example, if a capacity of a battery is C, a maximum current that the battery can withstand may range from 0.3 C to 0.4 C.

That is to say, a battery capacity of the first battery arranged on the main board may be less than a battery capacity of the second battery arranged on the sub-main board, and respective tolerable maximum currents of the first battery and the second battery may be positively correlated with the respective battery capacities of the first battery and the second battery. Therefore, the maximum charging current corresponding to the first battery is small, and the maximum charging current corresponding to the second battery is large.

The TypeC interface is close to the battery on the main board, resulting in a low charging path loss, and the TypeC interface is far away from the battery on the sub-main board, resulting in a high charging path loss. Therefore, when the first battery and the second battery are charged, a charging current flowing through the first battery is large, and a charging current flowing through the second battery is small. In addition, because the maximum charging current corresponding to the first battery is small, the first battery is prone to phenomena such as battery overheating and battery deformation compared with the second battery, resulting in impaired battery performance.

To avoid phenomena such as battery overheating and battery deformation in a battery of the foldable electronic device, a current that charges the first battery may be mainly controlled. In this way, a quantity of current control elements in the circuit of the foldable electronic device can be effectively limited, and heat consumption generated by the current control elements can be reduced.

In a possible implementation, when a current that charges the first battery in the first charging branch is greater than the first preset threshold, the control unit increases resistance values of some or all of the M current control elements, to cause a difference between an adjusted first ratio and a second ratio is less than a third preset value.

The first ratio may be a ratio of a current that charges the first battery in the first charging branch to a current that charges the second battery in the second charging branch, and the second ratio may be a ratio of the battery capacity of the first battery to the battery capacity of the second battery. The third preset value may be a small value, for example, any value less than 0.1. This is not specifically limited in this embodiment of this application.

In other words, the control unit may obtain the current that charges the first battery and the current that charges the second battery. The control unit may regulate, according to the battery capacity of the first battery and the battery capacity of the second battery, the current that charges the first battery and the current that charges the second battery by increasing or decreasing a resistance value of a current control element, so that the first ratio is close to the second ratio.

For example, the ratio of the battery capacity of the first battery to the battery capacity of the second battery, that is, the second ratio, is 1:2. When a current that charges the first battery in the first charging branch is greater than the first preset threshold, an example in which the ratio of the current that charges the first battery to the current that charges the second battery, that is, the first ratio, is 3:2 is used, and the control unit may increase resistance values of some or all of the M current control elements in the first branch, to reduce the current that charges the first battery, until a difference between the first ratio and the second ratio is less than the third preset value, that is, the first ratio is about 1:2. A resistance value of a current control element in the second branch may be adjusted according to the magnitude of the current that charges the second battery. When a current that charges the second battery is greater than the second preset threshold, the control unit may increase resistance values of some or all of the N current control elements in the second branch. When a current that charges the second battery is less than the second preset threshold, the control unit may decrease resistance values of some or all of the N current control elements in the second branch.

It may be understood that, when a current that charges the first battery in the first charging branch is less than the first preset threshold, or when a current that charges the second battery in the second charging branch is less than the first preset threshold, or when a current that charges the second battery in the second charging branch is greater than the first preset threshold, the control unit may be triggered to adjust the current that charges the first battery and the current that charges the second battery. The current that charges the first battery may increase or decrease. The current that charges the second battery may increase or decrease. A result of regulating a current by the control unit needs to satisfy: A difference between the adjusted first ratio and the second ratio is less than the third preset value.

In this way, the control unit controls the current control elements, so that a ratio of the current that charges the first battery to the current that charges the second battery is close to a capacity ratio of the two batteries, which can ensure the safety of the two batteries during the charging, and improve the charging speed of the batteries.

It should be noted that, in the foregoing embodiment, an example in which whether a current that charges the first battery is greater than the first preset threshold is gauged or whether a current that charges the second battery is greater than the second preset threshold is gauged is used for description. In a possible implementation, according to the foldable electronic device provided in the embodiments of this application, a current control element may be further used to gauge whether a current in a branch in which the current control element is located is greater than a threshold or a current control element may be further used to gauge whether a voltage between two sides of the current control element is greater than a threshold, so that the control unit adjusts the resistance value of the current control element and controls a current that charges a battery.

Using the resistance variable elements shown in FIG. 1 as an example, the resistance variable elements may include through-current gauge modules and voltage gauge modules.

In a possible implementation, corresponding current thresholds may be set for resistance variable elements at different positions.

When a through-current gauge module of a resistance variable element located in the first charging branch gauges that a current value flowing through the resistance variable element is greater than a current threshold, resistance values of some or all of resistance variable elements in the first charging branch may be increased. When a through-current gauge module of a resistance variable element located in the second charging branch gauges that a current value flowing through the resistance variable element is greater than a current threshold, resistance values of some or all of resistance variable elements in the second charging branch may be increased. When a through-current gauge module of a resistance variable element located between the first board-to-board connector and the second board-to-board connector gauges that a current value flowing through the resistance variable element is greater than a current threshold, if the current in the branch between the first board-to-board connector and the second board-to-board connector flows to the first battery, resistance values of some or all of the resistance variable elements between the first board-to-board connector and the second board-to-board connector may be increased, and/or resistance values of some or all of the resistance variable elements between the charging interface and the second board-to-board connector may be increased; and if the current in the branch between the first board-to-board connector and the second board-to-board connector flows to the second battery, resistance values of some or all of the resistance variable elements between the first board-to-board connector and the second board-to-board connector may be increased, and/or resistance values of some or all of the resistance variable elements between the charging interface and the first board-to-board connector may be increased.

When a through-current gauge module of a resistance variable element located in the first charging branch gauges that a current value flowing through the resistance variable element is less than a current threshold and a difference is large, resistance values of some or all of resistance variable elements in the first charging branch may be decreased. When a through-current gauge module of a resistance variable element located in the second charging branch gauges that a current value flowing through the resistance variable element is less than a current threshold and a difference is large, resistance values of some or all of resistance variable elements in the second charging branch may be decreased. When a through-current gauge module of a resistance variable element located between the first board-to-board connector and the second board-to-board connector gauges that a current value flowing through the resistance variable element is less than a current threshold and a difference is large, if the current in the branch between the first board-to-board connector and the second board-to-board connector flows to the first battery, resistance values of some or all of the resistance variable elements between the first board-to-board connector and the second board-to-board connector may be decreased, and/or resistance values of some or all of the resistance variable elements between the charging interface and the second board-to-board connector may be decreased; and if the current in the branch between the first board-to-board connector and the second board-to-board connector flows to the second battery, resistance values of some or all of the resistance variable elements between the first board-to-board connector and the second board-to-board connector may be decreased, and/or resistance values of some or all of the resistance variable elements between the charging interface and the first board-to-board connector may be decreased.

In another possible implementation, corresponding voltage thresholds may be set for resistance variable elements at different positions. When a voltage gauge module of a resistance variable element gauges that a voltage value between two sides of the resistance variable element is greater than a voltage threshold, or gauges that a voltage value between two sides of the resistance variable element is less than a voltage threshold and a difference is large, the control unit may control the resistance variable element in the charging circuit, to change a resistance value of the resistance variable element. For a control policy, reference may be made to the foregoing manner in which the control unit performs current control according to the current value gauged by the through-current gauge module, as long as the foregoing manner is adaptively changed. Details are not described in this embodiment of this application.

In this way, a current that charges a battery may not exceed a maximum charging current of the battery, to avoid phenomena such as battery overheating and battery deformation, thereby protecting battery performance.

In addition, the foldable electronic device in this embodiment of this application may further include OVP circuits. The OVP circuits are respectively arranged in the first folding portion 101 and the second folding portion 102.

The OVP circuit arranged in the first folding portion 101 is connected in series between the charging interface and the first charger chip, and is configured to protect the first charger chip, to prevent a large voltage or a large current from suddenly charging the charger to impair the first charger chip. The OVP circuit arranged in the second folding portion 102 is connected in series between the charging interface and the second charger chip, and is configured to protect the second charger chip, to prevent a large voltage or a large current from suddenly charging the charger to impair the second charger chip.

It should be noted that, the method for controlling a value of a current that charges a battery by placing a current control element in a charging circuit of a foldable electronic device provided in this embodiment of this application is also applicable to an electronic device that includes two or more batteries and in which the batteries are charged in parallel.

In conclusion, the foregoing embodiments show positions at which the current control elements may be arranged in the charging circuit of the foldable electronic device, and the positions may correspond to the position 1 to the position 12 shown in FIG. 6 to FIG. 8. By regulating resistance values of some or all of the current control elements, a current that charges a battery in the foldable electronic device can be regulated, to avoid an excessively large charging current, to protect performance of the battery from impairment, and the charging current that charges the battery can be made close to a rated charging current corresponding to the battery, thereby improving a charging speed of the battery. In addition, a battery capacity may be designed according to a stacking space of the foldable electronic device. Under a specific space, a larger current that charges a battery indicates a smaller capacity of the battery. Therefore, a maximum battery capacity may be designed by placing current control elements in the charging circuit of the foldable electronic device provided in the embodiments of this application.

In this embodiment of this application, when current control elements are arranged, according to an actual requirement, current control elements may be arranged at a same position of a single branch, or current control elements may be arranged at a plurality of positions of a single branch, or current control elements may be arranged on each of a plurality of branches. In addition, a quantity of current control elements in each branch is not specifically limited. It may be understood that, a quantity of current control elements arranged in the foldable electronic device cannot be excessively large, to prevent the current control elements from releasing excessive heat when the foldable electronic device is charged.

For example, Table 1 shows position features, current regulation effects, advantages, disadvantages, and preferred grades corresponding to the current control elements at the foregoing positions.

**Table 1**

| Position | Position feature | Advantages and disadvantages | Preferred grade |
|---|---|---|---|
| Position 1 | The position is symmetrical with the position 2 and can be moved to a TypeC micro-board. | The position is in a cold region (a low-temperature region, away from a heating element such as a battery) of the foldable electronic device, and is friendly to heat consumption of the whole machine during regulation, but has a relatively poor regulation effect before the first charger chip. | Preferred |
| Position 2 | The position is symmetrical with the position 1 and can be moved to a TypeC micro-board. | The position is in a cold region (a low-temperature region, away from a heating element such as a battery) of the foldable electronic device, and is friendly to heat consumption of the whole machine during regulation, but has a relatively poor regulation effect before the second charger chip. | Preferred |
| Position 3 | The position is symmetrical with the position 9. | A regulation effect is better than that of a current control element located in front of the charger chip. Compared with the position 5, an advantage is that the position is involved only when a battery is charged and is not affected when a battery is discharged, to save discharging power consumption. However, adjusting a current control element at the position 3 and a current control element at the position 9 simultaneously affects currents charging two batteries. | Preferred |
| Position 4 | The position is symmetrical with the position 7. | A regulation effect appears only when there is a significant difference between currents outputted by two charger chips, a larger difference indicates a better regulation effect, and the position is in a cold region (a low-temperature region, away from a heating element such as a battery) of the foldable electronic device. Theoretically, the maximum impedance has no upper limit and can be always increased. An extreme situation is equivalent to interrupting left and right connections to parallel batteries. | Less preferred |
| Position 5 | The position is symmetrical with the position 10, and has a regulation effect better than that of the position before the first charger chip (such as an SC Charger). | The regulation effect is better than that of a current control element located before the charger chip, but a disadvantage is that a current flowing through the position is about twice that of the current control element before the charger chip, resulting in heating about 4 times (the heating power is the current squared times the resistance) and a loss of I²R, and the position is in a hot region and is unfriendly to heat consumption of the foldable electronic device. In addition, when the battery is discharged, the current flows through the position 5 resulting in a power loss of I²R. | |
| Position 6 | The position is on a connection path of a negative electrode of the second battery. | The position after being connected in parallel with the ground resistance value of the rotating shaft is equivalent to a position such as the position 12, 11, or 10, has a regulation effect depending on the magnitude of the ground resistance value of the rotating shaft FPC, and is in a cold region in the foldable electronic device. | |
| Position 7 | The position is symmetrical with the position 4. | Refer to the position 4 | Less preferred |
| Position 8 | The position may be equivalent to the position 2 | Refer to the position 2 | Preferred |
| Position 9 | The position is symmetrical with the position 3. | Compared with the position 5, an advantage of the position is that the position is involved only during charging and is not affected during discharging, to save discharging power consumption. | Preferred |
| Position 10 | Refer to the position 5 | Refer to the position 5 | |
| Position 11 | Refer to the position 10 | Refer to the position 10. Compared with the position 10, an advantage is that the position is involved only when a battery is charged and is not affected when a battery is discharged, to save discharging power consumption. | |
| Position 12 | Refer to the position 10 | Refer to the position 10 | |

It may be understood that, preferred grades corresponding to different positions may be related to advantages and disadvantages corresponding to the positions, and may also be related to difficulties in placing current controlling elements at positions during actual implementation.

An embodiment of this application further provides a method for controlling a foldable electronic device. The control method is applied to the foldable electronic device provided in any one of the embodiments in FIG. 6 to FIG. 8. The method includes:

gauging a current that charges the first battery in the first charging branch; and increasing, by the control unit, resistance values of some or all of the M current control elements when a current that charges the first battery in the first charging branch is greater than a first preset threshold, to cause an adjusted current that charges the first battery in the first charging branch to be less than or equal to the first preset threshold.

In a possible implementation, the control unit decreases, when a current that charges the first battery in the first charging branch is less than the first preset threshold, resistance values of some or all of the M current control elements, to cause a difference between an adjusted current that charges the first battery in the first charging branch and the first preset threshold to be less than a first preset value.

In a possible implementation, the second charging branch includes N current control elements, where N is a positive integer; and The control unit decreases, when a current that charges the second battery in the second charging branch is less than a second preset threshold, resistance values of some or all of the N current control elements, to cause a difference between an adjusted current that charges the second battery in the second charging branch and the second preset threshold to be less than a second preset value.

or the control unit increases, when a current that charges the second battery in the second charging branch is greater than a second preset threshold, resistance values of some or all of the N current control elements, to cause an adjusted current that charges the second battery in the second charging branch to be less than or equal to the second preset threshold.

In this way, based on the method for controlling a foldable electronic device provided in this embodiment of this application, a charging process can be made safe, and battery performance can be protected from impairment. In addition, a high charging speed of a battery can be achieved, so that the charging is completed in a short time, thereby improving user experience.

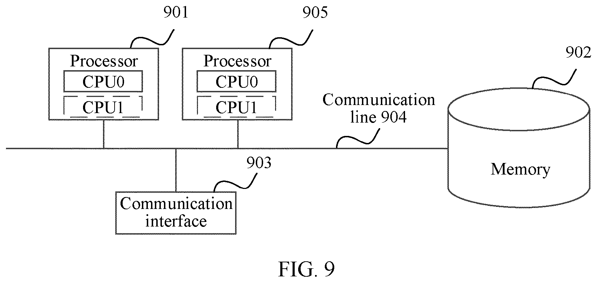

FIG. 9 is a schematic diagram of a hardware structure of an electronic device according to an embodiment of this application. As shown in FIG. 9, the electronic device may include a processor 901, a communication line 904, and at least one communication interface (for example, a communication interface 903 is used as an example for description in FIG. 9).

The processor 901 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 904 may include a circuit configured to transmit information between the foregoing components.

The communication interface 903 uses any apparatus of a transceiver type to communicate with another device or a communication network such as an Ethernet, wireless local area networks (wireless local area networks, WLAN), and the like.

Possibly, the electronic device may further include a memory 902.

The memory 902 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and connect to the processor by using the communication line 904. The memory may alternatively be integrated with the processor.

The memory 902 is configured to store computer executable instructions for performing the solutions of this application, and is controlled and executed by the processor 901. The processor 901 is configured to execute the computer executable instructions stored in the memory 902 to implement the method provided in the embodiments of this application.

Possibly, the computer executable instructions in this embodiment of this application may also be referred to as application code. This is not specifically limited in this embodiment of this application.

During specific implementation, in an embodiment, the processor 901 may include one or more CPUs, for example, a CPU0 and a CPU1 in FIG. 9.

In a specific implementation, in an embodiment, the electronic device may include one or more processors, for example, a processor 901 and a processor 905 in FIG. 9. Each of these processors may be a single-core (single-CPU) processor, or may be a multi-core (multi-CPU) processor. The processor herein may be one or more devices or circuits, and/or a processing core configured to process data (for example, computer program instructions).

In the foregoing embodiment, the instructions executed by the processor stored in the memory may be implemented in the form of a computer program product. The computer program product may be pre-written in the memory, or may be downloaded and installed in the memory in the form of software.

The computer program product includes one or more computer instructions. When the computer program instructions are loaded and executed on the computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, including one or more usable media. The usable medium may include a magnetic medium (for example, a floppy disk, a hard disk, or a magnetic tape), an optical medium (for example, a digital versatile disc (digital versatile disc, DVD)), a semi-conductive medium (for example, a solid state disk (solid state disk, SSD)), or the like.

An embodiment of this application further provides a computer-readable storage medium. The method described in the foregoing embodiments may be fully or partially implemented by software, hardware, firmware, or any combination thereof. The computer-readable medium may include a computer storage medium and a communication medium, and may also include any medium that enables a computer program to be transmitted from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. Any connection line may also be appropriately referred to as a computer readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc (CD), a laser disc, an optical disc, a digital versatile disc (digital versatile disc, DVD), a floppy disk, and a blue ray disc, where the magnetic disk generally reproduces data in a magnetic manner, and the optical disc reproduces data optically by using laser.

The foregoing combination should also be included in the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention Therefore, the protection scope of the present invention shall be subject to the protection scope of the claims.

It should be noted that, user information (including but not limited to user equipment information and user personal information) and data (including but not limited to data used for analysis, stored data, and displayed data) involved in embodiments of this application are both authorized by the user or fully authorized by all parties, and collection, use, and processing of related data need to comply with related laws, regulations, and standards of related countries and regions, and are provided with a corresponding operating entry, for the user to accept or reject the authorization.

## Claims

1. A foldable electronic device, wherein the electronic device comprises a first folding portion, a second folding portion, and a rotating shaft, and the first folding portion and the second folding portion are connected by the rotating shaft; and
a first battery and a charging interface are arranged in the first folding portion, and a second battery is arranged in the second folding portion, wherein a first charging branch and a second charging branch are provided between the charging interface of the electronic device and a ground terminal of the electronic device, the first charging branch is located in the first folding portion, and the second charging branch is distributed in the first folding portion, the second folding portion, and the rotating shaft; the first battery is in the first charging branch, and the second battery is in the second charging branch;
the first charging branch comprises M current control elements, wherein M is a positive integer; and
the electronic device further comprises a control unit, and the control unit is configured to increase, when a current that charges the first battery in the first charging branch is greater than a first preset threshold, resistance values of some or all of the M current control elements, to cause an adjusted current that charges the first battery in the first charging branch to be less than or equal to the first preset threshold.

2. The electronic device according to claim 1, wherein the first charging branch further comprises a first charger chip, the first charger chip is located between the charging interface and the first battery, and M1 current control elements of the M current control elements are located between the first charger chip and the first battery, wherein M1 is a positive integer less than or equal to M.

3. The electronic device according to claim 2, wherein the first charging branch further comprises a first board-to-board connector, and the first board-to-board connector is located between the first charger chip and the first battery; and
the M1 current control elements are located between the first charger chip and the first board-to-board connector;
or the M1 current control elements are located between the first board-to-board connector and the first battery;
or some of the M1 current control elements are located between the first charger chip and the first board-to-board connector, and some other of the M1 current control elements are located between the first board-to-board connector and the first battery.

4. The electronic device according to any one of claims 1 to 3, wherein the first charging branch further comprises a first charger chip, the first charger chip is located between the charging interface and the first battery, and M2 current control elements of the M current control elements are located between the first charger chip and the charging interface, wherein M2 is a positive integer less than or equal to M.

5. The electronic device according to claim 4, wherein the first charging branch further comprises a first gauge unit, the first gauge unit is located between the first battery and the ground terminal, and the first gauge unit is configured to gauge value of a current that charges the first battery.

6. The electronic device according to any one of claims 1 to 3, wherein the control unit is further configured to decrease, when a current that charges the first battery in the first charging branch is less than the first preset threshold, resistance values of some or all of the M current control elements, to cause a difference between an adjusted current that charges the first battery in the first charging branch and the first preset threshold to be less than a first preset value.

7. The electronic device according to claim 6, wherein
the control unit is configured to: when a current that charges the first battery in the first charging branch is greater than the first preset threshold, first increase resistance values of some or all of the M1 current control elements located between the first charger chip and the first battery, and then increase resistance values of some or all of the M2 current control elements located between the first charger chip and the charging interface, to cause an adjusted current that charges the first battery in the first charging branch to be less than or equal to the first preset threshold;
or the control unit is configured to: when a current that charges the first battery in the first charging branch is greater than the first preset threshold, first increase resistance values of some or all of the M1 current control elements located between the first charger chip and the first battery, to cause an adjusted current that charges the first battery in the first charging branch to be less than or equal to the first preset threshold, and then decrease resistance values of some or all of the M2 current control elements located between the first charger chip and the charging interface, to cause a difference between an adjusted current that charges the first battery in the first charging branch and the first preset threshold to be less than the first preset value.

8. The electronic device according to any one of claims 1 to 3, wherein the second charging branch comprises N current control elements, wherein N is a positive integer; and
the control unit is further configured to decrease, when a current that charges the second battery in the second charging branch is less than a second preset threshold, resistance values of some or all of the N current control elements, to cause a difference between an adjusted current that charges the second battery in the second charging branch and the second preset threshold to be less than a second preset value;
or the control unit is further configured to increase, when a current that charges the second battery in the second charging branch is greater than a second preset threshold, resistance values of some or all of the N current control elements, to cause an adjusted current that charges the second battery in the second charging branch to be less than or equal to the second preset threshold.

9. The electronic device according to claim 8, wherein the second charging branch further comprises a second charger chip, the second charger chip is located between the charging interface and the second battery, and N1 current control elements of the N current control elements are located between the second charger chip and the second battery, wherein N1 is a positive integer less than or equal to N.

10. The electronic device according to claim 9, wherein the second charging branch further comprises a second board-to-board connector, and the second board-to-board connector is located between the second charger chip and the second battery; and
the N1 current control elements are located between the second charger chip and the second board-to-board connector;
or the N1 current control elements are located between the second board-to-board connector and the second battery;
or some of the N1 current control elements are located between the second charger chip and the second board-to-board connector, and some other of the N1 current control elements are located between the second board-to-board connector and the second battery.

11. The electronic device according to claim 8, wherein N2 current control elements of the N current control elements are located between the second charger chip and the charging interface, wherein N2 is a positive integer less than or equal to N.

12. The electronic device according to claim 11, wherein the N2 current controlling elements are located in the first folding portion;
or the N2 current controlling elements are located in the second folding portion;
or some of the N2 current controlling elements are located in the first folding portion, and some other of the N2 current controlling elements are located in the second folding portion.

13. The electronic device according to claim 8, wherein N3 current control elements are comprised between the second battery and the ground terminal, wherein N3 is a positive integer less than or equal to N.

14. The electronic device according to claim 13, wherein the N3 current controlling elements are located on the first folding portion;
or the N3 current controlling elements are located in the second folding portion;
or the N3 current controlling elements are located in the rotating shaft;
or some of the N3 current controlling elements are located in the first folding portion, some of the N3 current controlling elements are located in the second folding portion, and remaining current controlling elements of the N3 current controlling elements are located in the rotating shaft.

15. The electronic device according to claim 8, wherein the first charging branch comprises the first board-to-board connector, the second charging branch comprises a second board-to-board connector, and L current control elements are comprised between the first board-to-board connector and the second board-to-board connector, wherein L is a positive integer.

16. The electronic device according to claim 15, wherein the L current controlling elements are located in the first folding portion;
or the L current controlling elements are located in the second folding portion;
or some of the L current controlling elements are located in the first folding portion, and some other of the L current controlling elements are located in the second folding portion.

17. The electronic device according to claim 8, wherein the second charging branch further comprises a second gauge unit, the second gauge unit is located between the second battery and the ground terminal, and the second gauge unit is configured to gauge value of a current that charges the second battery.

18. The electronic device according to claim 17, wherein
the control unit is configured to: when a current that charges the second battery in the second charging branch is less than the second preset threshold, first decrease resistance values of some or all of the N1 current control elements located between the second charger chip and the second battery, and then decrease resistance values of some or all of the N2 current control elements located between the second charger chip and the charging interface, to cause a difference between an adjusted current that charges the second battery in the second charging branch and the second preset threshold to be less than the preset value;
or the control unit is configured to: when a current that charges the second battery in the second charging branch is less than the second preset threshold, first decrease resistance values of some or all of the N1 current control elements located between the second charger chip and the second battery, to cause an adjusted current that charges the second battery in the second charging branch to be greater than the second preset threshold, and then increase resistance values of some or all of the N2 current control elements located between the second charger chip and the charging interface, to cause a difference between an adjusted current that charges the second battery in the second charging branch and the second preset threshold to be less than the preset value.

19. The electronic device according to claim 1, wherein a battery capacity of the first battery is less than a battery capacity of the second battery, and respective tolerable maximum currents of the first battery and the second battery are positively correlated with the respective battery capacities of the first battery and the second battery.

20. The electronic device according to claim 19, wherein the control unit is configured to increase, when a current that charges the first battery in the first charging branch is greater than the first preset threshold, resistance values of some or all of the M current control elements, to cause a difference between an adjusted first ratio and a second ratio is less than a third preset value; and the first ratio is a ratio of a current that charges the first battery in the first charging branch to a current that charges the second battery in the second charging branch, and the second ratio is a ratio of the battery capacity of the first battery to the battery capacity of the second battery.

21. A method for controlling a foldable electronic device, applied to the foldable electronic device according to any one of claims 1 to 20, wherein the method comprises:
gauging a current that charges the first battery in the first charging branch; and
increasing, by the control unit, resistance values of some or all of the M current control elements when a current that charges the first battery in the first charging branch is greater than a first preset threshold, to cause an adjusted current that charges the first battery in the first charging branch to be less than or equal to the first preset threshold.

22. The method according to claim 21, wherein the control unit decreases, when a current that charges the first battery in the first charging branch is less than the first preset threshold, resistance values of some or all of the M current control elements, to cause a difference between an adjusted current that charges the first battery in the first charging branch and the first preset threshold to be less than a first preset value.

23. The method according to claim 21, wherein the second charging branch comprises N current control elements, wherein N is a positive integer; and
the control unit decreases, when a current that charges the second battery in the second charging branch is less than a second preset threshold, resistance values of some or all of the N current control elements, to cause a difference between an adjusted current that charges the second battery in the second charging branch and the second preset threshold to be less than a second preset value;
or the control unit increases, when a current that charges the second battery in the second charging branch is greater than a second preset threshold, resistance values of some or all of the N current control elements, to cause an adjusted current that charges the second battery in the second charging branch to be less than or equal to the second preset threshold.

24. An electronic device, comprising: a processor and a memory, wherein
the memory is configured to store computer-executable instructions; and
the processor is configured to execute the computer-executable instructions stored in the memory, to cause the electronic device to perform the method according to any one of claims 21 to 23.

25. A computer-readable storage medium, wherein the computer-readable storage medium stores a computer program, and when executed by a processor, the computer program implements the method according to any one of claims 21 to 23.
